# EUROPÄISCHE PATENTANMELDUNG

(11) **EP 4 831 099 A1**
(43) Veröffentlichungstag der Anmeldung: **28.10.2026**
(21) Anmeldenummer: 26173580.7
(22) Anmeldetag: 21.04.2026
(51) Int. Cl.: B65G 59/06, B65G 59/10

(54) **SYSTEM UND VERFAHREN ZUR VEREINZELUNG VON GESTAPELTEN BEHÄLTERN**

(30) Priorität: 23.04.2025 DE 102025115622
(71) Anmelder: VEMAG Maschinenbau GmbH, 27283 Verden/Aller (DE)
(72) Erfinder: Bohling, Sebastian, 27283 Verden (DE); Badenhop, Marcel, 27367 Hellwege (DE)
(74) Vertreter: Eisenführ Speiser

(57) **Zusammenfassung**

Die Erfindung betrifft eine Entstapelvorrichtung (10) zum Vereinzeln von gestapelten Verpackungsbehältern (B1), umfassend
- ein Aufnahmeraum (200), der dazu eingerichtet ist, einen Behälterstapel (B) in einer Entnahmerichtung (RE) bewegbar aufzunehmen, derart, dass jeweils ein in Entnahmerichtung (RE) äußerer Verpackungsbehälter (B1) in eine Entnahmeposition (E) bewegbar ist,
- eine Saugeinrichtung (300) mit mindestens einer Saugeinheit (301) die dazu eingerichtet ist, mit dem jeweiligen in die Entnahmeposition (E) bewegten äußeren Verpackungsbehälter (B1) durch Herstellen eines Unterdrucks kraftschlüssig in Eingriff zu kommen und eine Lösebewegung (LB) in Entnahmerichtung (RE) durchzuführen, derart, dass der äußere Verpackungsbehälter (B1) durch die Lösebewegung von dem von dem Behälterstapel (B) in der Entnahmeposition getrennt wird,
- mindestens einen Antrieb (400) zum Erzeugen eines Antriebsdrehmoments (v).

Die Erfindung schlägt eine Fördereinrichtung (100) vor, mit mindestens einer Transporteinheit (110), die mit dem Behälterstapel (B) form- und/oder kraftschlüssig in Eingriff bringbar ist, und mindestens einen Antrieb (400) zum Übertragen eines Antriebsdrehmoments (v) mit der Transporteinheit (110) verbindbar ist, wobei die Transporteinheit (110) zum geführten Bewegen des Behälterstapels (B) in Entnahmerichtung (RE) , wobei der jeweils äußere Verpackungsbehälter (B1) in die Entnahmeposition (E) bewegt wird.

## Beschreibung

Die vorliegende Erfindung bezieht sich auf eine Entstapelvorrichtung zum Vereinzeln von gestapelten Behältern. Eine solche Entstapelvorrichtung umfasst einen Aufnahmeraum, der dazu eingerichtet ist, einen Behälterstapel in einer Entnahmerichtung bewegbar aufzunehmen, derart, dass jeweils ein in Entnahmerichtung äußerer Behälter in eine Entnahmeposition bewegbar ist, eine Saugeinrichtung mit mindestens einer Saugeinheit, die dazu eingerichtet ist, mit dem jeweiligen in die Entnahmeposition bewegten äußeren Behälter durch Herstellen eines Unterdrucks kraftschlüssig in Eingriff zu kommen und eine Lösebewegung in Entnahmerichtung durchzuführen, derart, dass der äußere Verpackungsbehälter durch die Lösebewegung, insbesondere ausschließlich durch die Lösebewegung, von dem von dem Behälterstapel in der Entnahmeposition getrennt wird, und mindestens einen Antrieb zum Erzeugen eines Antriebsdrehmoments. Insbesondere betrifft die Erfindung auch eine Fördereinrichtung für eine solche Entstapelvorrichtung und ein Verfahren zum Vereinzeln von gestapelten Behältern.

Derartige Entstapelvorrichtung werden auch als "Denester" bezeichnet und die beiden Begriffe werden in der vorliegenden Offenbarung als Synonyme verwendet. Unter dem Begriff Denester bzw. Entstapelvorrichtung wird im Sinne der vorliegenden Offenbarung eine Vorrichtung zum Vereinzeln von leeren Verpackungsbehältern aus einem Stapel in einer Lebensmittelverarbeitungslinie verstanden werden. Der Denester ist insbesondere dazu eingerichtet, formschlüssig ineinander geschachtelte, leere Verpackungsbehälter einzeln von einem Stapel abzunehmen und getaktet oder kontinuierlich an eine nachgelagerte Station, insbesondere eine Füllstation oder eine Siegelstation zu übergeben. Während Entstapeler, wie sie beispielsweise in der Logistik, an Flughäfen oder in der Lagertechnik verwendet werden, typischerweise zum Vereinzeln von großvolumigen, formstabilen Transportgebinden, wie etwa Großkisten, Gitterboxen oder Gepäckwannen eingerichtet sind, ist der Denester im Sinne der vorliegenden Offenbarung speziell auf das Vereinzeln von leichten, dünnwandigen und insbesondere tiefgezogenen oder thermogeformten Verpackungsbehältern ausgelegt, wie sie in der Lebensmittelindustrie zum Einsatz kommen. Ein solcher Denester weist grundsätzlich mechanische Greifmittel als Saugeinheit, insbesondere in Form von Saugnäpfen oder Vakuumsaugern, zum Vereinzeln der Verpackungsbehälter auf. Vorzugsweise kann die Saugeinheit eines solchen Denesters pneumatische Mittel, insbesondere Vakuummittel oder Druckluftmittel, zum Lösen einzelner Verpackungsbehälter aus dem Stapel umfassen.

Bei den durch den Denester zu vereinzelnden Verpackungsbehältern kann es sich insbesondere um Trays, Schalen, Menüschalen, Becher, Deckel, Siegelschalen oder andere zur Aufnahme von Lebensmitteln bestimmte Behältnisse handeln. Die Verpackungsbehälter können aus Kunststoff, insbesondere aus Polypropylen, Polystyrol, PET oder CPET, aus Aluminium, aus einem Faserformstoff oder aus einem Verbundmaterial gefertigt sein. Vorzugsweise weisen die Verpackungsbehälter eine Wandstärke auf, die typischerweise um ein Vielfaches geringer ist als die Wandstärke von Transportgebinden der Logistik.

Die zu vereinzelnden Verpackungsbehälter sind vorzugsweise formschlüssig ineinander geschachtelt. Unter einer formschlüssigen Schachtelung kann verstanden werden, dass ein Verpackungsbehälter zumindest abschnittsweise in einen darunter liegenden Verpackungsbehälter eingreift, insbesondere wobei ein konischer oder sich verjüngender Wandabschnitt eines oberen Verpackungsbehälters in einen korrespondierenden Wandabschnitt eines unteren Verpackungsbehälters eintaucht. Die formschlüssige Schachtelung kann bewirken, dass zwischen benachbarten Verpackungsbehältern im Stapel Haft- oder Klemmkräfte wirken, die beim Vereinzeln zu überwinden sind.

Auf dem Gebiet der Entstapelvorrichtungen für Verpackungslinien ist es üblich, mechanische Systeme zu verwenden, die darauf abzielen, einzelne Behälter der Verpackungslinien - also Verpackungsbehälter - aus einem Stapel zu trennen und für weitere Verarbeitungsschritte bereitzustellen. Die Vereinzelung der Verpackungsbehälter erfolgt dabei mit Taktzeiten von 100 oder mehr Vereinzelungen pro Minute.

Bekannte Systeme umfassen typischerweise mechanische Rückhalteeinrichtungen und pneumatische Saugeinrichtungen, wobei die Rückhalteeinrichtung den Behälterstapel oberhalb einer untersten Schale zurückhält und die Saugeinrichtung per Unterdruck mit der untersten Schale in Eingriff kommt und diese von den zurückgehaltenen Verpackungsbehältern wegbewegt. Im Falle eines Aneinanderhaftens der beiden untersten Schalen, was aufgrund des hohen Stapelgewichts infolge plastischer Verformung häufig vorkommt, hält die Rückhalteeinrichtung den Behälterstapel oberhalb der zwei aneinanderhaftenden untersten Schale zurück, sodass diese nicht vereinzelt werden können, sondern gemeinsam vom übrigen Behälterstapel getrennt werden.

Weitere Systeme umfassen eine Wendel mit Trennscheiben, wobei die Trennscheibe die Behälter voneinander trennt und der vereinzelte Behälter auf der Wendel weg von dem übrigen Behälterstapel bewegt wird hin zu einer Entnahmeposition. EP 3 912 941 B1 zeigt beispielsweise eine solche Entstapelvorrichtung. Diese Systeme sind oft auf feste Behälter mit klar definierten Randbereichen beschränkt, sodass ein definierter und ausreichend großer Abstand zwischen den Behältern bestehen bleibt, in den die Trennscheibe eindringen kann. Haften die Behälter aufgrund plastischer Verformung aneinander und deren Abstand zueinander reduziert sich, kann die Trennscheibe dabei allerdings nicht mehr in den Abstand zwischen den Randbereichen benachbarten Behälter eindringen und die Behälter vereinzeln.

Trotz der beträchtlichen Fortschritte auf dem Gebiet der Entstapelvorrichtungen gibt es nach wie vor Herausforderungen, die eine weitere Verbesserung erfordern. Bekannte Systeme können Schwierigkeiten haben, Verpackungsbehälter zuverlässig zu vereinzeln, insbesondere wenn die Behälter - wie bei Verpackungsbehältern üblich - dünnwandig und somit anfällig für Deformationen sind oder wenn sie aufgrund von Produktionsfehlern oder Materialunterschieden aneinanderhaften. Dies führt zu einer erhöhten Fehleranfälligkeit und kann die Effizienz von Verpackungslinien beeinträchtigen. Zudem sind viele bestehende Systeme nicht flexibel genug, um sich an unterschiedliche Behältertypen oder Produktionsanforderungen anzupassen, was die Einsatzmöglichkeiten in Verpackungslinien einschränkt und die Notwendigkeit für spezialisierte Lösungen erhöht.

Es ist daher Aufgabe der vorliegenden Erfindung, die Nachteile bekannter Systeme zumindest teilweise überwindet.

Es ist ein Ziel der vorliegenden Erfindung, eine Vorrichtung und ein Verfahren bereitzustellen, die einen oder mehrere der Nachteile der bekannten Systeme überwindet, indem sie eine effiziente und zuverlässige Vereinzelung auch von dünnwandigen Verpackungsbehältern ermöglichen und gleichzeitig eine schnelle und präzise Handhabung gewährleistet wird.

Die Erfindung löst die zugrundeliegende Aufgabe in einem ersten Aspekt durch eine Entstapelvorrichtung nach Anspruch 1. Insbesondere schlägt die Erfindung vor, dass die Entstapelvorrichtung bzw. der Denester eine Fördereinrichtung aufweist, die mindestens eine Transporteinheit umfasst. Diese Transporteinheit ist form- und/oder kraftschlüssig mit dem Behälterstapel in Eingriff bringbar und ist mit dem Antrieb verbunden. Bei einem solchen Antrieb handelt es sich insbesondere um einen Servomotor. Der Antrieb ist dazu eingerichtet, das Antriebsdrehmoment zum Antreiben der Fördervorrichtung auf diese zu übertragen. Die Transporteinheit ermöglicht eine geführte Bewegung des Behälterstapels in der Entnahmerichtung, wodurch der jeweils äußere Verpackungsbehälter mit einer definierten Geschwindigkeit in die Entnahmeposition bewegt wird, um von dem Behälterstapel durch die Saugeinrichtung getrennt zu werden. Ein Vorteil dem erfindungsgemäßen Denester liegt in der präzisen und kontrollierten Bewegung der Verpackungsbehälter in die Entnahmeposition, was eine effiziente und zuverlässige Vereinzelung der gestapelten Behälter mittels der Saugeinheit ermöglicht, da die Position des äußeren, zu vereinzelnden Behälters steuerbar ist. Es wird also stets ein Behälter hin zu der Entnahmeposition bewegt und kann dort mit der Saugeinheit in Eingriff kommen, wobei der übrige Behälterstapel benachbart zu der Entnahmeposition durch die Transporteinheit verbleibt. Es soll dabei verstanden werden, dass der äußere Verpackungsbehälter bis zum Ausführen der Lösebewegung durch den Eingriff mit der Saugeinheit mit dem übrigen Behälterstapel verbunden bleibt. Sobald der äußere Verpackungsbehälter vereinzelt ist, bewegt die Transporteinheit den nunmehr äußeren Behälter zum Vereinzeln in die Entnahmeposition. Diese kontrollierte Führung des jeweils äußeren Behälters ermöglicht auch bei variierenden Abständen der Behälter eine automatisierte Vereinzelung, da die Position des äußeren Behälters klar definiert und zeitlich steuerbar ist. Ein weiterer Vorteil besteht in der Möglichkeit, die Behälterstapel unabhängig von der Schwerkraftwirkung hin zu einer Entnahmeposition zu fördern. Dies kann den Druck auf den jeweils äußeren Behälter reduzieren und so dessen plastische Verformung minimieren. Dies begünstigt, dass es nicht zu einem Verklemmen oder anhaften der Verpackungsbehälter kommt und steigert die Flexibilität bei der Anlagengestaltung.

Der Denester kann eine oder mehrere Saugeinheiten zum Vereinzeln der Verpackungsbehälter aus dem Stapel aufweisen. Die Verpackungsbehälter weisen bevorzugt eine Wandstarke von höchstens 1,5 mm, insbesondere von wenigen zehntel Millimetern, beispielsweise 300 µm auf. Unter einer Saugeinheit kann im Sinne der vorliegenden Offenbarung eine Einheit verstanden werden, die dazu eingerichtet ist, mittels Unterdruck eine Haltekraft auf einen Verpackungsbehälter auszuüben, um diesen von dem Stapel zu lösen. Die Saugeinheit kann einen oder mehrere Saugnäpfe, Vakuumsauger und/oder Saugplatten umfassen, die an eine Vakuumquelle, insbesondere eine Vakuumpumpe oder einen Venturi-Ejektor, angeschlossen sind.

Die Saugeinheit ist insbesondere dazu eingerichtet, einen untersten oder einen obersten Verpackungsbehälter des Stapels zu erfassen und von dem darüber oder darunter liegenden Verpackungsbehälter zu trennen. Das Lösen des einzelnen Verpackungsbehälters aus dem Stapel erfolgt vorzugsweise gegen die zwischen den ineinander geschachtelten Verpackungsbehältern wirkenden Haft- und/oder Klemmkräfte. Die Saugeinheit trägt ferner dazu bei, eine Verformung des Verpackungsbehälters beim Vereinzeln zu minimieren. Da die zu vereinzelnden Verpackungsbehälter dünnwandig mit Wandstärken von weniger als 1,5 mm und insbesondere tiefgezogen oder thermogeformt sind, können bei mechanischen Greifmitteln lokale Verformungen oder Beschädigungen auftreten. Durch die flächige Krafteinleitung mittels Unterdruck kann eine schonende Vereinzelung erzielt werden. Insbesondere bei empfindlichen oder verformbaren Verpackungsbehältern ist die Saugeinheit gegenüber rein mechanischen Greifmitteln vorteilhaft.

Die Saugeinheit ist bevorzugt gesteuert betätigbar, wobei insbesondere der Unterdruck getaktet oder zeitgesteuert aktiviert und deaktiviert wird, um den Verpackungsbehälter nach dem Lösen aus dem Stapel gezielt freizugeben. Vorzugsweise ist die Saugeinheit mit einer Steuereinheit des Denesters verbunden, die den Vereinzelungstakt und/oder den Unterdruckzyklus steuert. Die Saugeinheit wirkt bevorzugt ferner mit einem Sensor zur Detektion des Vorhandenseins eines Verpackungsbehälters zusammen, um eine Fehlvereinzelung, insbesondere ein gleichzeitiges Entnehmen von zwei oder mehr Verpackungsbehältern, zu verhindern.

Vorzugsweise umfasst die Fördereinrichtung eine Mehrzahl von Transporteinheiten, die beabstandet zueinander angeordnet sind und jeweils einen Kontaktbereich aufweisen, der dazu eingerichtet ist, form- und/oder kraftschlüssig mit dem Behälterstapel in Eingriff zu kommen. Diese Transporteinheiten sind so konzipiert, dass zumindest eine von ihnen durch den Antrieb antreibbar ist. Die übrigen Transporteinheiten können also beispielsweise auch lediglich ein geführtes Bewegen des Behälterstapels entlang ihres Kontaktbereichs zulassen, wobei die Antriebskraft auf den Behälterstapel lediglich durch eine, mit dem Antrieb verbundene Transporteinheit erfolgt. Die Mehrzahl der Transporteinheiten ermöglicht eine gleichmäßige und kontrollierte Bewegung des Behälterstapels in der Entnahmerichtung, wodurch die Effizienz und Genauigkeit der Entstapelvorrichtung erhöht wird.

Der Kontaktbereich jeder Transporteinheit ist speziell gestaltet, um eine zuverlässige Verbindung mit dem Behälterstapel zu gewährleisten, sei es durch Formschluss, bei dem geometrische Ausprägungen der Transporteinheiten im Kontaktbereich in die Behälter eingreifen, oder durch Kraftschluss, bei dem die Verbindung durch die Anwendung von Druck oder Reibung erfolgt. Diese Mechanismen sorgen dafür, dass die Behälter sicher und stabil bewegt werden, ohne dass es zu einem Verrutschen oder einer Fehlpositionierung kommt. Die beabstandete Anordnung der Transporteinheiten trägt dazu bei, dass der Behälterstapel gleichmäßig unterstützt wird und die Last optimal verteilt wird.

Vorzugsweise umfasst die Entstapelvorrichtung eine Detektionseinheit, die zum Erfassen des jeweiligen in die Entnahmeposition bewegten äußeren Behälters eingerichtet ist, wobei die Detektionseinheit bevorzugt einen optischen Sensor umfasst. Die Detektionseinheit spielt eine zentrale Rolle bei der präzisen Steuerung und Überwachung des Entstapelvorgangs. Durch deren Integration, beispielsweise in Form eines optischen Sensors, wird eine zuverlässige Erfassung des äußeren Behälters gewährleistet, sobald dieser die Entnahmeposition erreicht. Dies ermöglicht eine genaue Synchronisation der nachfolgenden Schritte, wie das Aktivieren der Saugeinrichtung und das Durchführen der Lösebewegung, welches ursächlich für das Lösen des äußeren - bis dahin im Behälterstapel geführt bewegten - Verpackungsbehälters ist. Der optische Sensor bietet den Vorteil einer hohen Erkennungsgenauigkeit und schnellen Reaktionszeit, wodurch die Effizienz und Geschwindigkeit des Entstapelvorgangs gesteigert werden. Zudem kann die Detektionseinheit dazu beitragen, Fehlfunktionen zu vermeiden, indem sie sicherstellt, dass nur korrekt positionierte Behälter weiterverarbeitet werden. Die Kommunikation zwischen der Detektionseinheit und den anderen Komponenten der Entstapelvorrichtung erfolgt bevorzugt in Echtzeit, wodurch eine nahtlose Interaktion und Koordination gewährleistet wird.

Vorzugsweise umfasst die Entstapelvorrichtung eine Steuereinrichtung, die signalleitend mit der Detektionseinheit und dem Antrieb verbunden ist. Diese Steuereinrichtung ist dazu eingerichtet, den Antrieb beim Erfassen eines äußeren Behälters in der Entnahmeposition durch die Detektionseinheit zu stoppen. Die Detektionseinheit dient dazu, den äußeren Behälter in der Entnahmeposition zu erfassen und ein Signal an die Steuereinrichtung zu senden. Die Steuereinrichtung verarbeitet dieses Signal und gibt daraufhin ein Steuerkommando an den Antrieb, um dessen Bewegung zu stoppen. Dies stellt sicher, dass allein der äußere Verpackungsbehälter präzise in der Entnahmeposition positioniert wird und bereit ist, von der Saugeinrichtung erfasst zu werden. Dabei wird sichergestellt, dass nicht bereits der nächste Behälter in die Entnahmeposition bewegt wird. Durch diese Interaktion zwischen Detektionseinheit, Steuereinrichtung und Antrieb wird eine genaue Kontrolle über die Positionierung des Behälters ermöglicht, was die Effizienz und Zuverlässigkeit des Entstapelvorgangs erhöht. Die Detektionseinheit kann verschiedene Technologien nutzen, wie optische Sensoren, Infrarotsensoren oder andere geeignete Detektionsmechanismen, um den äußeren Behälter zu erkennen. Die Steuereinrichtung kann programmierbare Logikcontroller (PLCs) oder andere Steuerungssysteme umfassen, die in der Lage sind, schnelle und präzise Steuerbefehle zu verarbeiten. Der Vorteil dieser Konfiguration liegt in der verbesserten Genauigkeit und Geschwindigkeit des Entstapelprozesses. Dies reduziert die Wahrscheinlichkeit von Fehlpositionierungen oder Blockierungen, die den Entstapelvorgang unterbrechen könnten. Darüber hinaus ermöglicht die signalleitende Verbindung zwischen den Komponenten eine schnelle und zuverlässige Kommunikation, die für die Echtzeitsteuerung des Antriebs entscheidend ist. Die Kombination dieser Elemente trägt dazu bei, die Gesamtleistung der Entstapelvorrichtung zu verbessern und die Effizienz der Behälterverarbeitung zu steigern.

Vorzugsweise umfasst die Transporteinheit ein antreibbares Transportmittel, das mit dem Behälterstapel form- und/oder kraftschlüssig in Eingriff bringbar ist und zumindest abschnittsweise in Entnahmerichtung verläuft. Das antreibbare Transportmittel ist so konzipiert, dass es eine zuverlässige Verbindung mit dem Behälterstapel herstellt, entweder durch Formschluss, bei dem die geometrische Passform zwischen Transportmittel und Behälterstapel eine feste Verbindung ermöglicht, oder durch Kraftschluss, bei dem die Verbindung durch Anpresskraft oder Reibung hergestellt wird. Diese Flexibilität in der Art des Eingriffs stellt sicher, dass die Vorrichtung für unterschiedliche Behältertypen und Stapelkonfigurationen geeignet ist. Das Transportmittel verläuft zumindest abschnittsweise in Entnahmerichtung und verbleibt somit abschnittsweise im Eingriff mit dem Behälterstapel und führt gemeinsam mitdiesem eine Relativbewegung in Entnahmerichtung entlang einer definierten Bahn, also abschnittsweise eine Linearbewegung durch. Diese geführte Bewegung minimiert das Risiko von Fehlpositionierungen der Behälter und stellt zugleich fortlaufend deren Führung sicher. Ein weiterer Vorteil der geführten Bewegung ist die Reduzierung von mechanischen Belastungen auf die Behälter, da die Bewegung gleichmäßig und kontrolliert erfolgt. Die Möglichkeit, das Transportmittel anzutreiben, bietet zudem die Flexibilität, die Geschwindigkeit und Kraft der Bewegung an die spezifischen Anforderungen des Entstapelvorgangs anzupassen, was zu einer weiteren Optimierung der Effizienz führt.

Vorzugsweise ist das Transportmittel als Transportriemen ausgeführt. Dieser Transportriemen weist eine äußere Eingriffsfläche auf, die dazu eingerichtet ist, mit dem Behälterstapel form- und/oder kraftschlüssig in Eingriff zu kommen. Der Transportriemen ermöglicht eine präzise und kontrollierte Bewegung des Behälterstapels in der Entnahmerichtung, wodurch der jeweils äußere Verpackungsbehälter in die Entnahmeposition bewegt wird. Die äußere Eingriffsfläche bildet somit den Kontaktbereich aus. Die äußere Eingriffsfläche des Transportriemens ist speziell gestaltet, um eine zuverlässige Verbindung mit dem Behälterstapel zu gewährleisten, was die Effizienz und Genauigkeit des Entstapelvorgangs erhöht. Der Transportriemen kann durch einen Antrieb angetrieben werden, der ein Antriebsdrehmoment auf den Transportriemen überträgt, um die Bewegung des Behälterstapels zu steuern. Ein weiterer Vorteil der Verwendung eines Transportriemens ist die Möglichkeit, die Geschwindigkeit und Richtung der Bewegung des Behälterstapels präzise zu steuern, was die Flexibilität und Vielseitigkeit der Entstapelvorrichtung erhöht. Die äußere Eingriffsfläche des Transportriemens kann aus einem Material bestehen, das eine hohe Haftung und Widerstandsfähigkeit bietet, um eine zuverlässige Verbindung mit dem Behälterstapel zu gewährleisten.

Vorzugsweise ist die äußere Eingriffsfläche des Transportmittels zumindest abschnittsweise plan gestaltet und dient dazu, eine kraftschlüssige Verbindung mit dem Behälterstapel herzustellen. Diese äußere Eingriffsfläche ermöglicht eine verbesserte Interaktion zwischen der Transporteinheit und dem Behälterstapel, indem sie eine gleichmäßige und stabile Kontaktfläche bietet. Die Verbindung kann dabei unabhängig von der konkreten Behältergeometrie und insbesondere deren Randbereichen erfolgen. Durch die plan gestaltete Eingriffsfläche wird eine optimale Kraftübertragung gewährleistet, wodurch die Bewegung des Behälterstapels in die Entnahmeposition präziser und kontrollierter erfolgt. Die plan gestaltete Eingriffsfläche trägt dazu bei, dass die Behälter während des Transportvorgangs weniger anfällig für Verschiebungen oder Verrutschen sind, was die Effizienz und Zuverlässigkeit der Entstapelvorrichtung erhöht. Ein weiterer Vorteil der plan gestalteten Eingriffsfläche ist die einfache Herstellung und Wartung, da sie keine komplexen Formen oder Strukturen erfordert. Dies trägt zur Kosteneffizienz der Entstapelvorrichtung bei.

Gemäß einer alternativen Ausführungsform weist die äußere Eingriffsfläche zumindest abschnittsweise einen Verzahnungsabschnitt mit quer zur Entnahmerichtung verlaufenden Zähnen auf. Diese Verzahnung ist so gestaltet, dass sie einen formschlüssigen Eingriff mit dem Behälterstapel ermöglicht. Die Zähne sind vorzugsweise dazu eingerichtet, in einen Abstand zwischen zwei benachbarten Behältern einzugreifen. Durch den Verzahnungsabschnitt wird eine präzise und stabile Verbindung zwischen der Fördereinrichtung und dem Behälterstapel gewährleistet, was die Effizienz und Zuverlässigkeit des Entstapelvorgangs erhöht. Der formschlüssige Eingriff sorgt dafür, dass die Behälter während des Transports in der Entnahmerichtung sicher gehalten werden, wodurch ein Verrutschen oder Verkanten der Behälter vermieden wird. Ferner ermöglicht die Anordnung der Zähne quer zur Entnahmerichtung eine optimale Kraftübertragung, da die Zähne in die Zwischenräume der Behälter eingreifen und somit eine direkte mechanische Verbindung schaffen. Diese mechanische Verbindung trägt dazu bei, dass die Bewegung des Behälterstapels in der Entnahmerichtung präzise gesteuert werden kann.

Vorzugsweise umfasst die Entstapelvorrichtung eine Fördereinrichtung, die mindestens eine mit dem mindestens einen Antrieb verbindbare Antriebsschnittstelle zum Übertragen des Antriebsdrehmoments des Antriebs und mindestens eine mit der Antriebsschnittstelle verbundene Umlenkeinheit aufweist, die dazu eingerichtet ist, das übertragene Antriebsdrehmoment des Antriebs in eine Bewegung der Transportmittel, vorzugsweise eine zumindest abschnittsweise Linearbewegung der Transportmittel in Entnahmerichtung, umzulenken. Die Antriebsschnittstelle ist zum Übertragen des Antriebsdrehmoments des Antriebs vorzugsweise lösbar und formschlüssig mit dem Antrieb verbindbar, und der Antrieb ist bevorzugt bewegbar, insbesondere schwenkbar, und die Antriebsschnittstelle ortsfest an der Entstapelvorrichtung aufgenommen, derart, dass der Antrieb von einer Ruheposition, in welcher der Antrieb beabstandet von der Antriebsschnittstelle ist, in eine Arbeitsposition bewegbar ist, in welcher der Antrieb mit der Antriebsschnittstelle in Eingriff bringbar ist. Die Antriebsschnittstelle dient als Verbindungspunkt zwischen dem Antrieb und der Fördereinrichtung, wobei sie eine lösbare und formschlüssige Verbindung ermöglicht, die eine einfache Wartung und Austauschbarkeit des jeweils genutzten Antriebs bzw. die Nutzung der Fördereinrichtung mit verschiedenen Antrieben gewährleistet. Ein Vorteil dieser Konfiguration ist somit die erhöhte Flexibilität und Anpassungsfähigkeit der Entstapelvorrichtung, da der Antrieb schwenkbar und bewegbar ist und somit leicht von der Ruheposition in die Arbeitsposition gebracht werden kann, um mit der Antriebsschnittstelle in Eingriff zu kommen. Dies ermöglicht eine schnelle und effiziente Inbetriebnahme der Vorrichtung.

Vorzugsweise ist die Fördereinrichtung mit einer Mehrzahl von Transporteinheiten ausgestattet, und dazu eingerichtet, diese über die Antriebsschnittstelle und die Umlenkeinheit mittels des Antriebs synchron anzutreiben. Durch die Verwendung einer Mehrzahl von Transporteinheiten wird die Stabilität und Zuverlässigkeit der Bewegung des Behälterstapels erhöht, da die Last gleichmäßig verteilt wird und somit die Gefahr von Verklemmen oder ungleichmäßiger Bewegung reduziert wird. Die Synchronisation der Transporteinheiten durch die Umlenkeinheit und die Antriebsschnittstelle ermöglicht eine präzise Steuerung der Bewegung, was die Effizienz des Entstapelvorgangs verbessert und die Zykluszeiten verkürzt. Darüber hinaus wird durch die koordinierte Bewegung der Transporteinheiten sichergestellt, dass der äußere Verpackungsbehälter stets exakt in die Entnahmeposition gelangt, was die Genauigkeit und Wiederholbarkeit des Entstapelvorgangs erhöht. Vorzugsweise verläuft die Entnahmerichtung im Wesentlichen in vertikaler Richtung. Somit macht sich die Fördereinrichtung neben den Transporteinheiten auch die Schwerkraft zur Bewegung der Behälter in Transportrichtung zu Nutze. Dies reduziert die notwendige Antriebsleistung und steigert die Effizienz der Entstapelvorrichtung insgesamt.

Die vertikale Entnahmerichtung trägt auch zur Reduzierung der mechanischen Belastungen auf die Behälter und die Vorrichtung bei, da die Bewegungen in einer natürlichen Richtung erfolgen und weniger Widerstand und Reibung erzeugen. Dies führt zu einer längeren Lebensdauer der Vorrichtung und einer geringeren Wartungsanforderung. Ein Vorteil der vertikalen Entnahmerichtung ist die Möglichkeit, die Raumhöhe für die Installation der Entstapelvorrichtung zu nutzen, was eine effiziente Nutzung des verfügbaren Platzes in oftmals engen Produktionsumgebungen ermöglicht.

Vorzugsweise umfasst die Fördereinrichtung einen Fangmechanismus. Der Fangmechanismus ist dazu eingerichtet, dass er mindestens mit einem an dem äußeren Behälter in der Entnahmeposition anhaftenden Verpackungsbehälter in Eingriff kommt, um dessen Bewegung in Entnahmerichtung zu hemmen. Dies ist besonders vorteilhaft, da es ermöglicht, den äußeren Behälter durch eine gezielte Lösebewegung von dem anhaftenden Behälter zu trennen, ohne dass der gesamte Stapel destabilisiert wird. Der Fangmechanismus trägt dazu bei, die Zuverlässigkeit der Entstapelvorrichtung zu erhöhen, indem er verhindert, dass mehrere Behälter gleichzeitig in die Entnahmeposition gelangen bzw. durch die Saugeinheit entnommen werden. Dies fördert eine präzise und kontrollierte Trennung der Behälter, was die Effizienz des gesamten Entstapelprozesses steigert.

Vorzugsweise umfasst die Entstapelvorrichtung einen Fangmechanismus, der ein Fangmittel mit mindestens einer orthogonal zur Entnahmerichtung verlaufenden Fangkante aufweist. Diese Fangkante steht in Richtung eines Zentrums des Aufnahmeraums vor und ist dazu ausgebildet, in einen Randbereich der Behälter einzugreifen und mindestens mit dem äußeren Behälter formschlüssig in Eingriff zu kommen. Das Transportmittel ist dabei dazu eingerichtet, den äußersten Behälter in der Entnahmeposition vollständig freizugeben, derart, dass dieser somit nur noch durch die Fangkante gehalten wird. Der äußere Verpackungsbehälter verformt sich infolge der Lösebewegung elastisch, um den Formschluss zur Fangkante zu lösen. Somit erfolgt das Lösen des äußeren Behälters nicht unkontrolliert bei Freigabe durch das Transportmittel, sondern erst durch den Kontakt zur Saugeinheit und die Lösebewegung. Bevorzugt sind mindestens zwei einander gegenüberliegende Fangmittel mit parallel zueinander verlaufenden Fangkanten vorgesehen, die mit einander gegenüberliegenden Seiten der Behälter in Eingriff kommen. Somit wird der jeweilige Behälter gleichmäßig durch die Fangkanten gehalten und ein Verkippen wird verhindert. Vorzugsweise ist die Fangkante eine erste Fangkante, die eingerichtet ist, mit dem äußeren Behälter und einem anhaftenden Verpackungsbehälter formschlüssig in Eingriff zu kommen. Das Fangmittel weist ferner bevorzugt jeweils eine zweite Fangkante auf, die eingerichtet ist, bei einem Lösen des anhaftenden Behälters von der ersten Fangkante in den Randbereich des anhaftenden Behälters formschlüssig einzugreifen. Die Fangkanten des Fangmittels greifen formschlüssig in die Randbereiche der Behälter ein und ermöglichen so eine präzise und kontrollierte Trennung der Behälter voneinander. Die elastische Verformung der Verpackungsbehälter während der Lösebewegung trägt dazu bei, den Formschluss zu lösen und die Behälter voneinander zu trennen, ohne dass eine Beschädigung der Behälter auftritt.

Vorzugsweise umfasst die Entstapelvorrichtung einen Führungsmechanismus, der den Aufnahmeraum umgibt und dazu eingerichtet ist, mindestens die Transporteinheiten an einer Mehrzahl von Montagepositionen, die orthogonal zur Entnahmerichtung verteilt sind, lösbar aufzunehmen. Dies bedeutet, dass die Transporteinheiten flexibel und an verschiedenen Positionen entlang des Führungsmechanismus montiert werden können, wodurch eine präzise und kontrollierte Bewegung des Behälterstapels in Entnahmerichtung ermöglicht wird. Der Führungsmechanismus gewährleistet, dass die Transporteinheiten in jeder der Montagepositionen einen definierten Abstand zur Entnahmeposition in Entnahmerichtung aufweisen, was eine gleichmäßige und zuverlässige Führung der Behälter auch bei wechselnder Positionierung der Transporteinheiten sicherstellt. Diese Flexibilität in der Montageposition der Transporteinheiten erlaubt eine Anpassung an unterschiedliche Behältergrößen und -formen, wodurch die Vielseitigkeit der Entstapelvorrichtung erhöht wird.

Alternativ oder ergänzend ist der Führungsmechanismus bevorzugt dazu eingerichtet, den Fangmechanismus an einer Mehrzahl von Montagepositionen orthogonal zur Entnahmerichtung lösbar aufzunehmen. Dies ermöglicht eine flexible Positionierung des Fangmechanismus, der dazu dient, den äußeren Behälter nach der Trennung vom Stapel sicher zu greifen und zu transportieren. Der Führungsmechanismus stellt sicher, dass der Fangmechanismus in verschiedenen Montagepositionen montiert werden kann und so an unterschiedliche Behältergrößen angepasst werden kann.

Durch die Möglichkeit, sowohl die Transporteinheiten als auch den Fangmechanismus an verschiedenen Montagepositionen entlang des Führungsmechanismus zu positionieren, wird die Entstapelvorrichtung äußerst flexibel und anpassungsfähig an unterschiedliche Behältertypen und -größen zu verbessern.

Vorzugsweise umfasst erstreckt sich der Führungsmechanismus zumindest abschnittsweise entlang einer Längserstreckung orthogonal zur Entnahmerichtung und im Betrieb parallel zu einer Außenkante der Behälter und ist dazu eingerichtet, die Transporteinheit und/oder den Fangmechanismus entlang der Längserstreckung stufenlos aufzunehmen. Der Führungsmechanismus weist vorzugsweise einen entlang der Längserstreckung verlaufenden Führungskörper auf, der dazu eingerichtet ist, die Transporteinheit und/oder den Fangmechanismus entlang der Längserstreckung stufenlos aufzunehmen. Diese Konfiguration ermöglicht eine präzise und flexible Führung der Transporteinheit und/oder des Fangmechanismus, wodurch eine optimale Positionierung und Bewegung der Behälter mit unterschiedlichen Größen gewährleistet wird. Die stufenlose Aufnahme entlang der Längserstreckung bietet den Vorteil einer Feinjustierung der Position der Transporteinheit bzw. des Fangmechanismus, was zu einer verbesserten Handhabung führt. Der Führungskörper ist bevorzugt als eine Führungsstange bzw. ein Führungsrohr ausgebildet.

Vorzugsweise umfasst der Fangmechanismus eine Feststellvorrichtung, welche dazu eingerichtet ist, mit dem Führungskörper kraftschlüssig zum Arretieren des Fangmechanismus in Eingriff zu kommen. Die Feststellvorrichtung umfasst insbesondere ein Halteteil zur zumindest auch kraftschlüssigen Kopplung mit dem Führungskörper und ein Spannelement zum Aufbringen einer Spannkraft auf das Halteteil. Durch die kraftschlüssige Kopplung des Halteteils mit dem Führungskörper wird eine sichere Verbindung geschaffen, die eine ungewollte Bewegung des Fangmechanismus verhindert. Das Spannelement ermöglicht durch Aufbringen der Spannkraft diese kraftschlüssige Kopplung. Die präzise Arretierung des Fangmechanismus durch die Feststellvorrichtung minimiert das Risiko von Fehlfunktionen oder Beschädigungen der gestapelten Behälter und trägt somit zur Langlebigkeit und Robustheit der Entstapelvorrichtung bei. Durch die kraftschlüssige Verbindung kann der Fangmechanismus dabei stufenlos an einer beliebigen Position mit dem Führungskörper in Eingriff gebracht werden, was die Anpassung an unterschiedliche Behältergrößen sicherstellt.

Vorzugsweise umfasst die Transporteinheit eine Führungsaufnahme, die jeweils derart mit dem Führungskörper in Eingriff bringbar sind, dass die Transporteinheit in Entnahmerichtung arretiert und entlang der Längserstreckung bewegbar ist. Durch die Führungsaufnahme wird die Transporteinheit sicher und stabil entlang der Längserstreckung des Führungskörpers geführt, und deren Positionierung zusätzlich stabilisiert. Alternativ oder ergänzend umfasst der Fangmechanismus vorzugsweise eine Führungsausnehmung, die jeweils derart mit dem Führungskörper in Eingriff bringbar sind, dass der Fangmechanismus in Entnahmerichtung arretiert und entlang der Längserstreckung bewegbar ist. Durch die Führungsausnehmung wird der Fangmechanismus sicher und stabil entlang der Längserstreckung des Führungskörpers geführt, und dessen Positionierung zusätzlich stabilisiert. Die Führungsausnehmung sorgt dabei gemeinsam mit der Fixierung durch den Feststellmechanismus für eine verdrehsichere Arretierung des Fangmechanismus.

Es ist bevorzugt, dass die Antriebsschnittstelle dazu eingerichtet ist, das Antriebsdrehmoment aufzunehmen und der Umlenkeinheit als Eingangsdrehmoment um eine Eingangsachse bereitzustellen, wobei die Umlenkeinheit ein Getriebe aufweist, das dazu eingerichtet ist, das Eingangsdrehmoment ein Ausgangsdrehmoment um mindestens eine Hauptantriebsachse zu übersetzen und der mindestens einen Transporteinheit bereitzustellen, wobei sich das Eingangsdrehmoment und das Ausgangsdrehmoment betragsmäßig unterscheiden oder die Eingangsachse von der Hauptantriebsachse verschieden ist.. Das Getriebe in der Umlenkeinheit spielt eine entscheidende Rolle bei der Umwandlung des Eingangsdrehmoments in ein Ausgangsdrehmoment, das sich betragsmäßig -also hinsichtlich der Größe de wirkenden Drehmoments- oder durch dessen Wirkrichtung - also hinsichtlich der Richtung des Drehmoments um die Achse oder der Richtung der Achse, um die das Drehmoment wirkt - unterscheidet. Somit kann das Drehmoment bedarfsgerecht variiert werden und der bestehende Bauraum und auch notwendigen Drehmomenten bzw. Einschränkungen Rechnung getragen werden.

Vorzugsweise weist das Getriebe einen Umlenkmechanismus mit einer Antriebswelle aufweist, die über ein von der Antriebsschnittstelle angetriebenes Antriebsmittel, insbesondere eine Antriebskette, mit dem Eingangsdrehmoment um eine parallel zur Entnahmerichtung verlaufende Eingangsachse angetrieben wird, und mindestens einer Abtriebswelle, die in einem Winkel, insbesondere orthogonal zu der Antriebswelle steht, und zumindest mittelbar drehmomentübertagend mit der Antriebswelle verbunden ist, derart, dass die mindestens eine Transporteinheit durch die Abtriebswelle mit dem Ausgangsdrehmoment v_{Aus} angetrieben wird. Durch die Verwendung einer Antriebskette als Antriebsmittel wird eine robuste und zuverlässige Verbindung geschaffen, die eine gleichmäßige Kraftübertragung gewährleistet. Diese Übersetzung des Drehmoments in ein Drehmoment um eine andere Achse, insbesondere eine orthogonal verlaufende Achse, ist besonders vorteilhaft, da sie eine einfache Übertragung auf mehrere entlang dieser Hauptantriebsachsen verteilte Transporteinheiten ermöglicht, die nebeneinander positioniert, gemeinsam den Behälterstapel bewegen können. Somit können mit nur einem Antrieb mehrere Transporteinheiten parallel angetrieben werden. Die parallele Ausrichtung der Antriebswelle zur Entnahmerichtung sorgt für eine effiziente Raumnutzung, während die orthogonale Anordnung der Abtriebswelle eine optimale Kraftübertragung und Bewegungssteuerung auf mehrere beanstandet zueinander mit der Abtriebswelle in Eingriff stehende Transporteinheiten ermöglicht.

Vorzugsweise umfasst das Getriebe ferner einen Verteilmechanismus mit einer Hilfsabtriebswelle, die unmittelbar von der Antriebswelle angetrieben wird, wobei die Hilfsabtriebswelle mit zwei Abtriebswelle n drehmomentübertragend in Eingriff ist, um die Abtriebswelle n mittelbar mit der Antriebswelle zu verbinden. Somit können über die Hilfsabtriebswelle gleich mehrere Abtriebswellen mittelbar mit der Antriebswelle verbunden werden und dadurch mit nur einem Antrieb betrieben werden. So wird auch ein paralleler Antrieb von zwei oder mehr Antriebswellen, und damit der durch diese angetriebenen Transporteinheiten, ermöglicht. Weiter bevorzugt weist die Hilfsabtriebswelle vorzugsweise ein Schneckenrad auf, das mit einer Verzahnung der Antriebswelle drehmomentübertragend in Eingriff steht. Die Verwendung eines Schneckenrads ermöglicht eine kompakte Bauweise des Getriebes, wodurch die Entstapelvorrichtung platzsparend und flexibel in verschiedenen Umgebungen eingesetzt werden kann. Ferner sogt die Neigung des Schneckenrads zur Selbsthemmung für zusätzliche Sicherheit der Entstapelvorrichtung. Bei einem plötzlichen Ausfall des Antriebs kommt es zur Selbsthemmung zwischen dem Schneckenrad und der mit diesem in Eingriff stehenden Verzahnung an der Antriebswelle, sodass die Transporteinheiten stillstehen und der Behälterstapel nicht einfach - beispielsweise schwerkraftbedingt - rutschen kann.

Das Getriebe umfasst bevorzugt mindestens zwei beabstandet zueinander angeordnete Kegelgetriebeeinheiten, die dem Verteilmechanismus zugeordnet sind, wobei die Kegelgetriebeeinheiten jeweils ein auf der Hilfsabtriebswelle angeordnetes Antriebskegelrad und ein auf der jeweiligen Abtriebswelle angeordnetes Abtriebskegelrad aufweisen, das mit dem Antriebskegelrad in Eingriff steht und mit dem Ausgangsdrehmoment um die Hauptantriebsachse angetrieben wird. Das Kegelgetriebeerlaubt eine kompakte Bauweise und eine flexible Anpassung der Bewegungsrichtung. Die Antriebskegelräder, die parallel und beabstandet zueinander an der Hilfsabtriebswelle gelagert sind, sorgen über den Eingriff mit einer korrespondierenden Anzahl von Abtriebskegelrädern für eine gleichmäßige Kraftübertragung auf die mit den Abtriebskegelrädern verbundenen Abtriebswellen und damit auf mehrere Transporteinheiten. Die präzise und effiziente Kraftübertragung durch das Kegelgetriebe trägt dazu bei, dass die Entstapelvorrichtung gestapelte Behälter zuverlässig und schnell vereinzeln kann, was die Produktivität und Effizienz in Anwendungen, bei denen eine schnelle und zuverlässige Vereinzelung von Behältern erforderlich ist, deutlich steigert.

Vorzugsweise wird die Abtriebswelle zur Übertragung des Ausgangsdrehmoments formschlüssig mit mindestens einer der Transporteinheiten verbunden. Diese Verbindung ermöglicht eine effiziente Übertragung des Drehmoments von der Abtriebswelle auf die Transporteinheiten, wodurch der Behälterstapel in der gewünschten Entnahmerichtung bewegt werden kann. Eine bevorzugte Ausführungsform eines solchen Formschlusses ist ein nicht-kreisförmiger Querschnitt der Abtriebswelle, insbesondere ein polygonaler Querschnitt, der den Vorteil einer verbesserten Drehmomentübertragung bietet und ein Durchrutschen der Welle in der Wellenaufnahme der Transporteinheiten verhindert. Die korrespondierende Wellenaufnahme der Transporteinheiten ist dabei bevorzugt speziell für diesen nicht-kreisförmigen Querschnitt ausgebildet, was die mechanische Verbindung zwischen der Abtriebswelle und den Transporteinheiten optimiert und eine präzise Steuerung der Bewegungen des Behälterstapels ermöglicht. Diese mechanische Verbindung trägt dazu bei, die Effizienz der Entstapelvorrichtung zu steigern, indem sie eine zuverlässige und stabile Bewegung der Behälter gewährleistet. Der Fangmechanismus, der vorzugsweise eine drehbar gelagerte und korrespondierende Lagerstelle aufweist, ist ebenfalls für den nicht-kreisförmigen Querschnitt ausgelegt. Diese Lagerstelle ermöglicht eine sichere Arretierung des Fangmechanismus in der Entnahmerichtung, was die Stabilität und Sicherheit der Entstapelvorrichtung erhöht. Durch die formschlüssige Verbindung zwischen der Abtriebswelle und den Transporteinheiten sowie die korrespondierende Lagerstelle des Fangmechanismus wird eine präzise und kontrollierte Bewegung der Behälter gewährleistet, was die Effizienz der Entstapelvorrichtung verbessert und die Gefahr von Fehlfunktionen reduziert.

Vorzugsweise wird der Aufnahmeraum mindestens abschnittsweise durch die Fördereinrichtung ausgebildet, sodass die Transporteinheiten an mindestens drei voneinander beabstandeten Kontaktstellen mit dem Behälterstapel in Kontakt sind, um dessen Positionierung relativ zur Entnahmerichtung festzulegen und eine Torsion des Behälterstapels zu verhindern. Dies bedeutet, dass die Fördereinrichtung nicht nur für den Transport des Behälterstapels verantwortlich ist, sondern auch eine strukturelle Rolle spielt, indem sie den Aufnahmeraum teilweise bildet. Die drei Kontaktstellen sorgen für eine stabile und präzise Positionierung des Behälterstapels, was besonders wichtig ist, um eine gleichmäßige und zuverlässige Entnahme der Behälter zu gewährleisten. Durch diese Anordnung wird eine Torsion des Behälterstapels verhindert, was die Integrität und die Ausrichtung der Behälter während des Entstapelvorgangs bewahrt. Dies ist von Vorteil, da eine Torsion zu einer fehlerhaften Entnahme führen könnte, was den gesamten Prozess beeinträchtigen würde. Darüber hinaus ist dem Aufnahmeraum vorzugsweise ein Leitblech zugeordnet, das dazu eingerichtet ist, den Behälterstapel in Richtung des Aufnahmeraums zu leiten. Das Leitblech dient als Führungshilfe, die den Behälterstapel in die korrekte Position bringt und sicherstellt, dass die Behälter ordnungsgemäß in die Entnahmeposition bewegt werden. Dies trägt zur Effizienz und Genauigkeit des Entstapelvorgangs bei, indem es mögliche Fehlpositionierungen und Blockierungen des Behälterstapels minimiert. Die Kombination dieser Merkmale führt zu einer verbesserten Funktionalität der Entstapelvorrichtung, indem sie eine präzise und zuverlässige Positionierung und Bewegung der Behälter gewährleistet. Die Interaktion zwischen der Fördereinrichtung und dem Aufnahmeraum sowie die Unterstützung durch das Leitblech bieten eine optimierte Lösung für das Vereinzeln von gestapelten Behältern, indem sie die mechanische Stabilität und die Führung des Behälterstapels verbessern.

Vorzugsweise umfasst der Führungsmechanismus eine Verbindungsstange, die orthogonal zur Längserstreckung verläuft. Diese Verbindungsstange ist mit dem entlang der Längserstreckung verlaufenden Führungskörper an mehreren Positionen in Eingriff bringbar, wobei dieser Eingriff insbesondere stufenlos erfolgen kann. Durch diese Konfiguration wird eine variable Projektionsfläche des Aufnahmeraums geschaffen, die durch den Führungskörper und die Verbindungsstange definiert wird. Diese Projektionsfläche ist an die Behälter anpassbar, was eine flexible Handhabung unterschiedlicher Behältergrößen und -formen ermöglicht. Die stufenlose Anpassbarkeit der Verbindungsstange an den Führungskörper ermöglicht eine schnelle und unkomplizierte Umstellung auf unterschiedliche Behältertypen, was die Flexibilität der Vorrichtung in verschiedenen industriellen Anwendungen erhöht.

Die Erfindung löst die eingangs genannte Aufgabe in einem zweiten Aspekt durch eine Fördervorrichtung nach Anspruch 13. Die Fördereinrichtung ist für die Nutzung in einer Entstapelvorrichtung, insbesondere einer Entstapelvorrichtung gemäß dem ersten Aspekt der Erfindung ausgelegt. Die Fördereinrichtung umfasst eine oder mehrere Transporteinheiten, die mit einem Behälterstapel form- und/oder kraftschlüssig in Eingriff bringbar sind. Diese Transporteinheiten sind dazu eingerichtet, dass sie mit mindestens einem Antrieb der Entstapelvorrichtung verbunden werden können, um die Transporteinheit anzutreiben. Die Transporteinheit ist dazu eingerichtet, einen in einem Aufnahmeraum der Entstapelvorrichtung aufgenommenen Behälterstapel in einer vorgegebenen Entnahmerichtung zu bewegen und dabei einen jeweils äußeren Behälter des Behälterstapels in eine Entnahmeposition zu bewegen. Die Erfindung gemäß dem zweiten Aspekt macht sich durch die spezifische Ausbildung der Fördereinrichtung die eingangs in Bezug auf den ersten Aspekt der Erfindung beschriebenen Vorteile zu Eigen. Vorteile und bevorzugte Ausführungsformen der Entstapelvorrichtung gemäß dem ersten Aspekt der Erfindung sind ebenso Vorteile und bevorzugte Ausführungsformen der Fördereinrichtung gemäß dem zweiten Aspekt der Erfindung.

Die Erfindung löst die eingangs genannte Aufgabe in einem zweiten Aspekt durch eine Verpackungslinie nach Anspruch 14. Insbesondere wird eine Verpackungslinie zum Verpacken von Produkten in Behältern, insbesondere von Nahrungsmittelprodukten vorgeschlagen, die mindestens eine Entstapelvorrichtung gemäß dem ersten Aspekt der Erfindung umfasst. Diese Entstapelvorrichtung ist in der Lage, gestapelte Behälter aufzunehmen und sie einzeln in eine Entnahmeposition zu bewegen, wo sie durch eine Saugeinrichtung getrennt werden. Diese Saugeinrichtung nutzt Unterdruck, um den äußeren Behälter kraftschlüssig zu greifen und ihn durch eine Lösebewegung von dem Stapel zu trennen. Die Verpackungslinie umfasst zudem mindestens ein Zuführband, das die Produkte in einen Verpackungsbereich zuführt und sie an die vereinzelten Behälter übergibt. Das Zuführband ist dazu eingerichtet, dass es die Produkte kontinuierlich und gleichmäßig transportiert, was eine gleichbleibende Geschwindigkeit und Präzision bei der Übergabe der Produkte an die Behälter gewährleistet. Weiterhin enthält die Verpackungslinie mindestens eine Zuführeinrichtung, die die vereinzelten Behälter zu dem Verpackungsbereich transportiert. Diese Zuführeinrichtung sorgt dafür, dass die Behälter in einer geordneten und kontrollierten Weise zu dem Verpackungsbereich gelangen, was die Integration der verschiedenen Komponenten der Verpackungslinie erleichtert und eine reibungslose Arbeitsweise sicherstellt. Schließlich umfasst die Verpackungslinie mindestens eine Verpackungseinheit, die die Produkte in den vereinzelten Behältern im Verpackungsbereich verpackt. Diese Verpackungseinheit ist so konzipiert, dass sie die Produkte effizient und sicher in die Behälter verpackt, wobei verschiedene Verpackungsmethoden und -techniken angewendet werden können, um den spezifischen Anforderungen der Produkte gerecht zu werden. Insgesamt macht sich die Verpackungslinie dabei durch Nutzung einer Entstapelvorrichtung gemäß dem ersten Aspekt der Erfindung die eingangs in Bezug auf den ersten Aspekt der Erfindung beschriebenen Vorteile zu Eigen. Vorteile und bevorzugte Ausführungsformen der Entstapelvorrichtung gemäß dem ersten Aspekt der Erfindung sind ebenso Vorteile und bevorzugte Ausführungsformen der Verpackungslinie gemäß dem dritten Aspekt der Erfindung.

Die Erfindung löst die eingangs genannte Aufgabe in einem zweiten Aspekt durch ein Verfahren nach Anspruch 15. Das Verfahren zum Vereinzeln von gestapelten Behältern umfasst mehrere Schritte, die darauf abzielen, einen Behälterstapel in einer definierten Entnahmerichtung zu bewegen und die Behälter einzeln zu entnehmen. Zunächst wird der Behälterstapel so aufgenommen, dass der äußerste Behälter in Entnahmerichtung in eine Entnahmeposition bewegbar ist. Eine Transporteinheit wird form- und/oder kraftschlüssig mit dem Behälterstapel in Eingriff gebracht und durch einen Antrieb angetrieben, der ein Antriebsdrehmoment erzeugt. Der Behälterstapel wird durch die Transporteinheit in der Entnahmerichtung geführt bewegt, sodass der äußere Verpackungsbehälter in die Entnahmeposition bewegt wird. Ein Unterdruck wird durch eine Saugeinheit erzeugt, um mit dem jeweiligen äußeren Behälter in der Entnahmeposition kraftschlüssig in Eingriff zu kommen. Anschließend wird eine Lösebewegung durch die Saugeinheit durchgeführt, die den äußeren Behälter von dem Behälterstapel trennt. Das Verfahren macht sich durch das gezielte Führen des Behälterstapels durch die Transporteinheit die eingangs in Bezug auf den ersten Aspekt der Erfindung beschriebenen Vorteile zu Eigen. Vorteile und bevorzugte Ausführungsformen der Entstapelvorrichtung gemäß dem ersten Aspekt der Erfindung sind ebenso Vorteile und bevorzugte Ausführungsformen des Verfahrens gemäß dem vierten Aspekt der Erfindung.

Die Erfindung wird im Folgenden anhand bevorzugter Ausführungsbeispiele unter Bezugnahme auf die beiliegenden Figuren beschrieben.
- FIG. 1: zeigt eine Ausführungsform einer Entstapelvorrichtung mit einem Aufnahmeraum, mehreren Transporteinheiten und einem Führungsmechanismus;
- FIG. 2: zeigt eine Ausführungsform einer Entstapelvorrichtung mit mehreren Transporteinheiten und einem Führungsmechanismus, der den Aufnahmeraum umgibt,
- FIG. 3: zeigt eine Ausführungsform einer Entstapelvorrichtung mit einem Aufnahmeraum, einer Fördereinrichtung und einem Fangmechanismus;
- FIG. 4: zeigt eine Ausführungsform der Entstapelvorrichtung mit mehreren Transporteinheiten und einem Fangmechanismus;
- FIG. 5: zeigt eine Ausführungsform einer Entstapelvorrichtung mit einer Fördereinrichtung, einem Aufnahmeraum und einem Fangmechanismus;
- FIG. 6a: zeigt eine Ausführungsform einer Transporteinheit in einer ersten perspektivischen Ansicht;
- FIG. 6b: zeigt eine Ausführungsform einer Transporteinheit in einer zweiten perspektivischen Ansicht;
- FIG. 6c: zeigt eine Detaildarstellung einer Transporteinheit mit einer Verzahnung;
- FIG. 7: zeigt eine schematische Darstellung eines Getriebesystems, das dazu eingerichtet ist, ein Eingangsdrehmoment in ein orthogonal verlaufendes Ausgangsdrehmoment zu übersetzen;
- FIG. 8: zeigt eine Ausführungsform eines Getriebes mit mehreren Kegelrädern und Antriebswellen,
- FIG. 9: zeigt eine Ausführungsform eines Fangmechanismus einer Entstapelvorrichtung;
- FIG. 10: zeigt eine schematische Darstellung einer Verpackungslinie mit einer Entstapelvorrichtung zum Vereinzeln von gestapelten Behältern;
- FIG. 11: zeigt eine Ausführungsform einer Entstapelvorrichtung zum Vereinzeln von gestapelten Behältern; und
- FIG. 12: zeigt ein schematisches Flussdiagramm eines Verfahrens zum Vereinzeln von gestapelten Behältern.

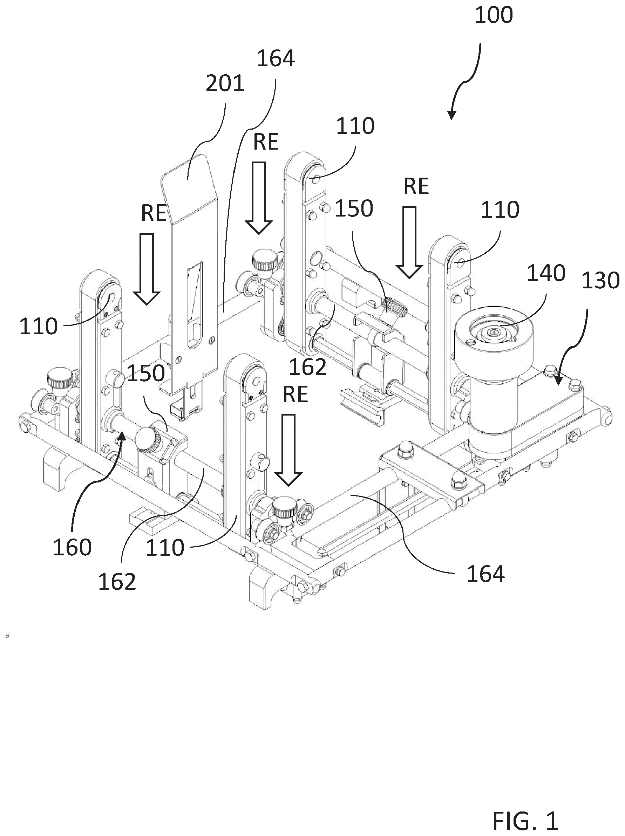

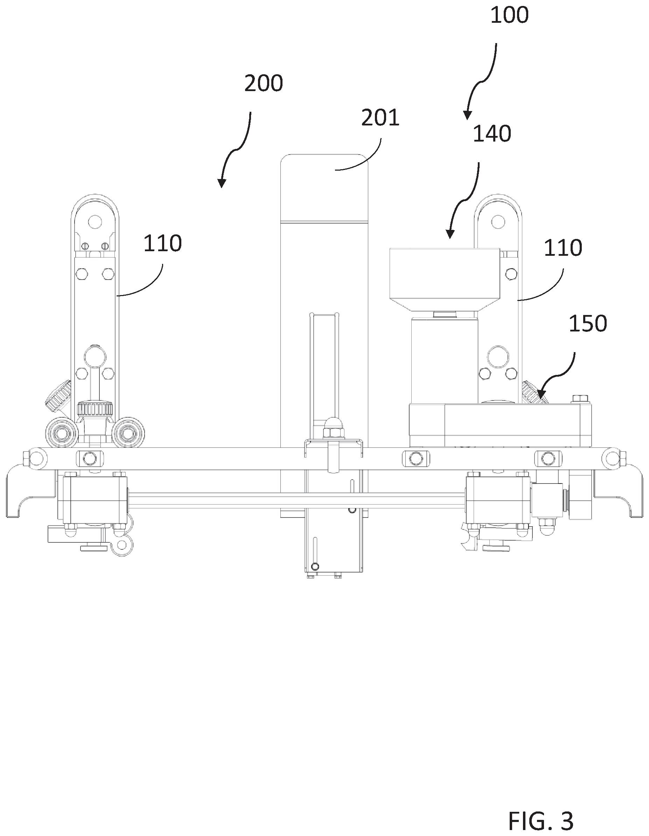

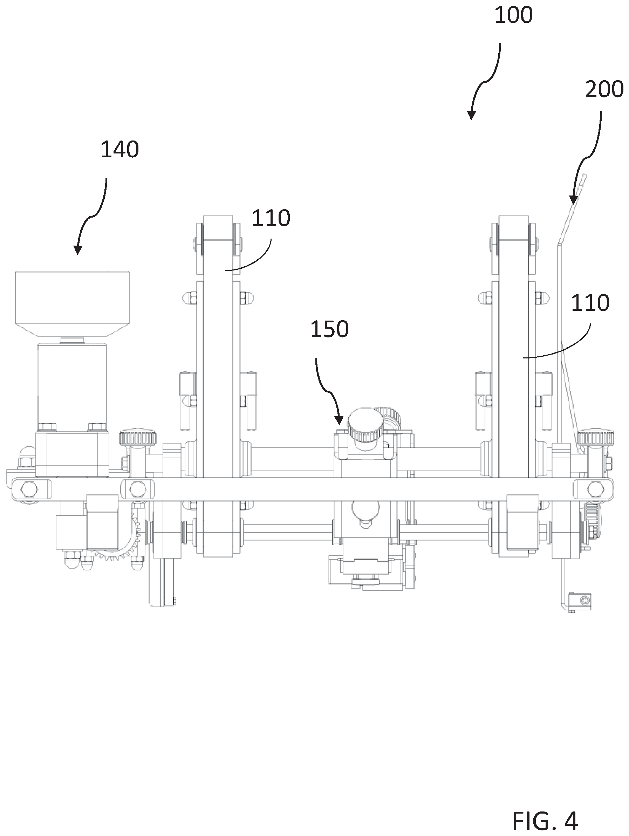

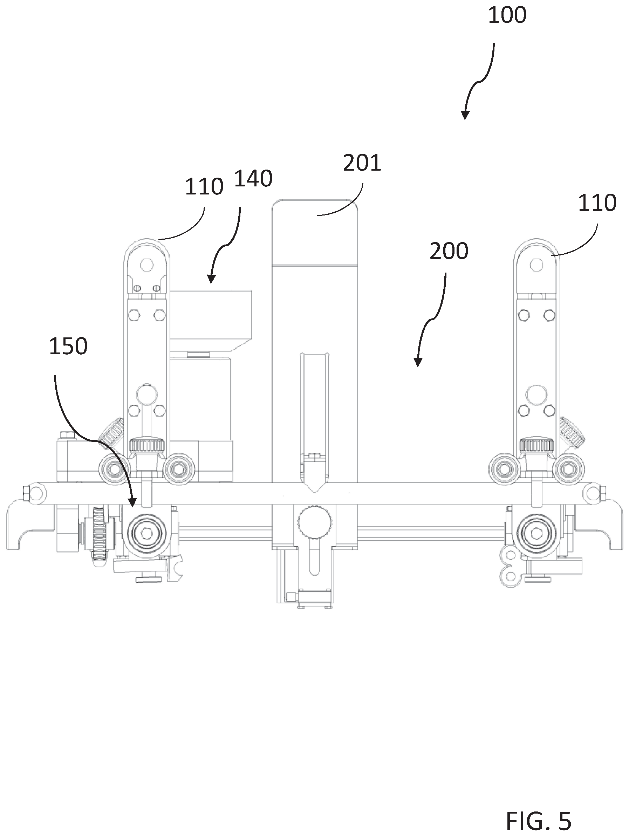

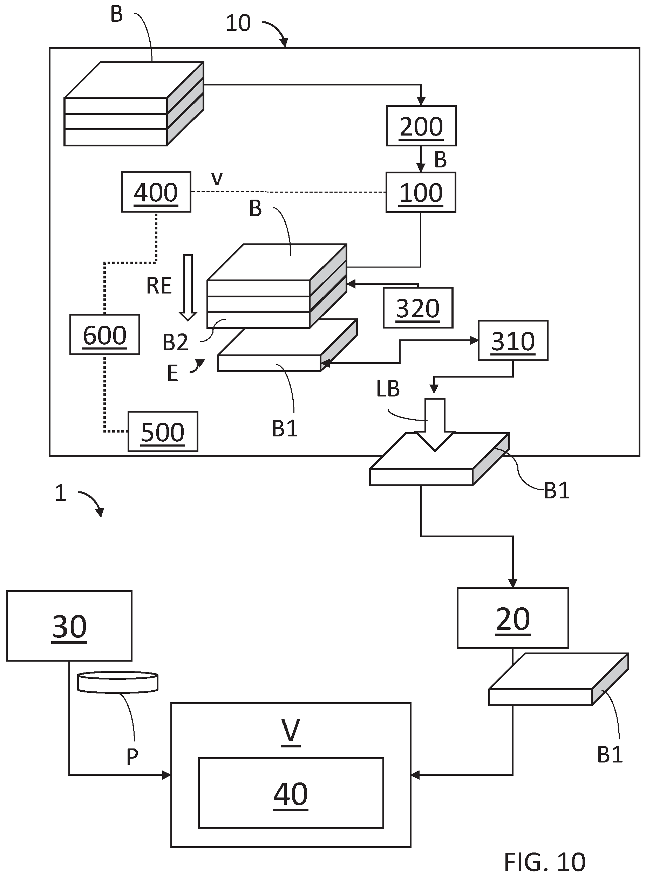

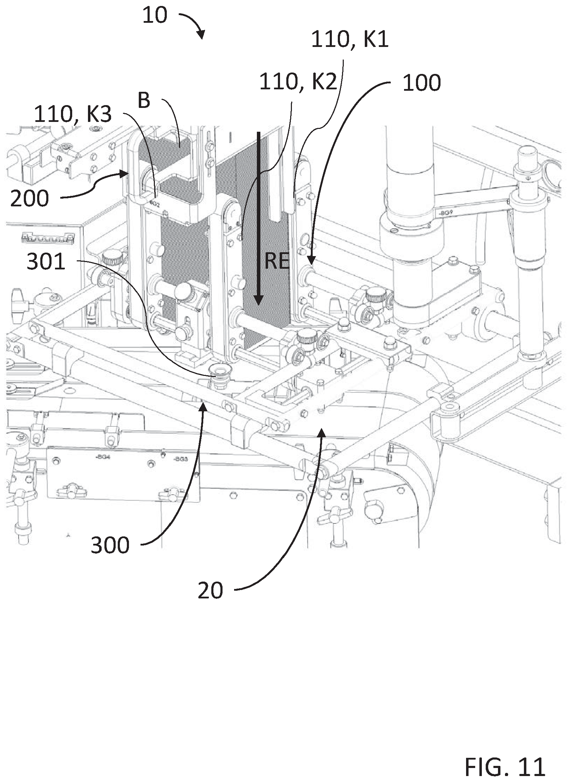

FIG. 1 bis FIG. 5 zeigen eine Entstapelvorrichtung 10 zum Vereinzeln von gestapelten Behältern B1, B2 (vgl. FIG. 10). Die Entstapelvorrichtung 10 umfasst eine Fördereinrichtung 100 mit mehreren Transporteinheiten 110, die dazu eingerichtet sind, einen Behälterstapel B (vgl. FIG. 11) in einer Entnahmerichtung RE (vgl. FIG. 1) zu bewegen und einen Aufnahmeraum 200, in welchem der Behälterstapel B aufgenommen ist.

Der Aufnahmeraum 200 ist so gestaltet, dass er den Behälterstapel B bewegbar in der Entnahmerichtung RE aufnimmt, wobei jeweils ein äußerer Verpackungsbehälter B1 in die Entnahmeposition E bewegt wird. Der Aufnahmeraum 200 wird bevorzugt mindestens abschnittsweise durch die Fördereinrichtung 100 ausgebildet. Ein Leitblech 201 ist dem Aufnahmeraum 200 zugeordnet und dient dazu, den Behälterstapel B beim Einführen in die Entstapelvorrichtung 10 in Richtung des Aufnahmeraums 200 zu leiten.

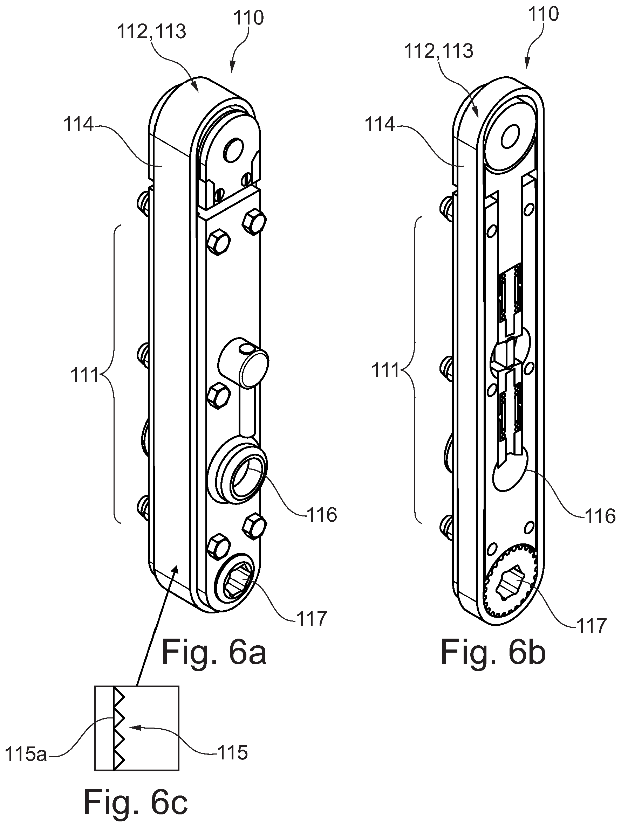

Die Transporteinheiten 110 sind form- und/oder kraftschlüssig mit dem Behälterstapel B in Eingriff bringbar. Die Transporteinheiten 110 sind dafür bevorzugt mit einem Transportmittel 112 (vgl. FIG. 6a bis FIG. 6c) ausgestattet, und deren Funktionsweise wird im Detail im Zusammenhang mit FIG. 6a bis FIG. 6c beschrieben.

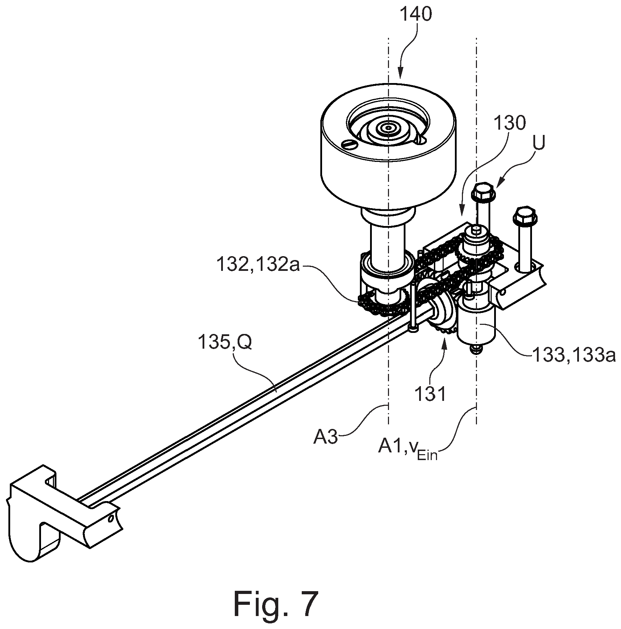

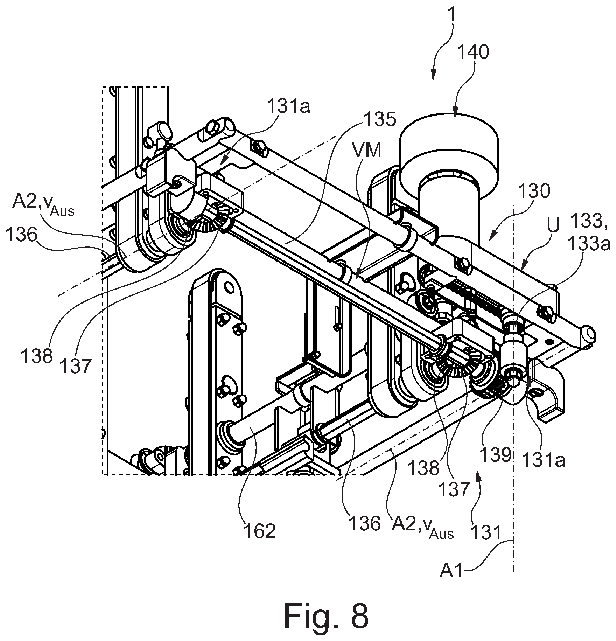

Die Entstapelvorrichtung 1 umfasst einen Antrieb 400 (vgl. FIG. 10), der ein Antriebsdrehmoment v erzeugt und über eine Antriebsschnittstelle 140 mit der Transporteinheit 110 verbunden ist. Die Antriebsschnittstelle 140 ist dazu eingerichtet, das Antriebsdrehmoment v des Antriebs 400 zu übertragen. Die Antriebsschnittstelle 140 ist vorzugsweise lösbar und formschlüssig mit dem Antrieb 400 verbindbar. Der Antrieb 400 ist bewegbar, insbesondere schwenkbar, und die Antriebsschnittstelle 140 ist ortsfest an der Entstapelvorrichtung 10 aufgenommen. Der Antrieb 400 kann von einer Ruheposition, in welcher er beabstandet von der Antriebsschnittstelle 140 ist, in eine Arbeitsposition bewegt werden, in welcher er mit der Antriebsschnittstelle 140 in Eingriff bringbar ist. Die Antriebsschnittstelle 140 überträgt das Antriebsdrehmoment v auf die Transporteinheiten 110, wobei eine Umlenkeinheit 130 das Antriebsdrehmoment in eine Bewegung der Transportmittel 112 umwandelt. Die Antriebsschnittstelle 140 ist dabei dazu eingerichtet, das Antriebsdrehmoment v aufzunehmen und der Umlenkeinheit 130 als ein um eine Eingangsachse A1 wirkendes Eingangsdrehmoment v_{Ein} bereitzustellen (vgl. FIG. 10). Der genaue Aufbau und die Funktionsweise der Umlenkeinheit 130 wird im Detail im Zusammenhang mit FIG. 7 und FIG. 8 beschrieben.

Die Mehrzahl von Transporteinheiten 110 ist vorzugsweise über die Antriebsschnittstelle 140 und die Umlenkeinheit 130 mittels des mindestens einen Antriebs 400 synchron antreibbar.

Weiterhin ist die Fördereinrichtung 100 mit einem Fangmechanismus 150 ausgestattet, der dazu eingerichtet ist, mit einem an dem äußeren Verpackungsbehälter B1 in der Entnahmeposition E anhaftenden Verpackungsbehälter B2 in Eingriff zu kommen, um dessen Bewegung in Entnahmerichtung RE zu hemmen. Der genaue Aufbau und die Funktionsweise des Fangmechanismus 150 wird im Detail im Zusammenhang mit FIG. 7 und FIG. 8 beschrieben.

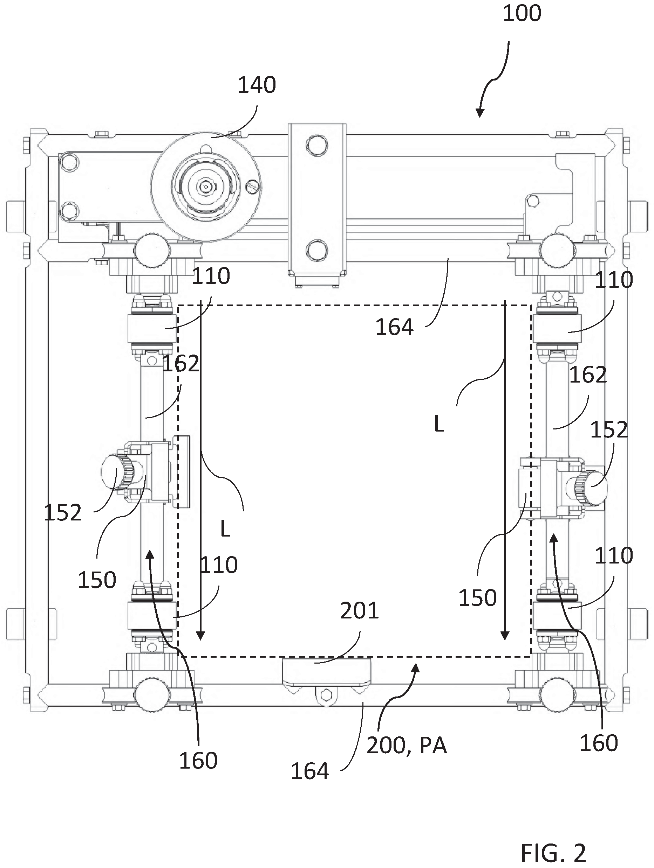

Die Fördereinrichtung 100 umfasst einen Führungsmechanismus 160, der den Aufnahmeraum 200 umgibt und die Transporteinheiten 110 an mehreren Montagepositionen orthogonal zur Entnahmerichtung RE lösbar aufnimmt. Der Führungsmechanismus 160 erstreckt sich entlang einer Längserstreckung L (vgl. FIG. 2) und ist bevorzugt dazu eingerichtet, die Transporteinheiten 110 stufenlos aufzunehmen. Der Führungskörper 162 verläuft entlang der Längserstreckung L und dient der stufenlosen Aufnahme der Transporteinheiten 110.

Der Führungsmechanismus 160 umfasst vorliegend zwei Verbindungsstangen 164, die mit zwei entlang der Längserstreckung L verlaufenden Führungskörpern 162 an einer Mehrzahl von Positionen in Eingriff bringbar sind, derart, dass der Aufnahmeraum 200 eine durch den Führungskörper 162 und die Verbindungsstange 164 definierte variable Projektionsfläche PA (vgl. FIG. 2) aufweist, die an die Behälter B anpassbar ist. Jeweils zwei der Transporteinheiten 110 ist mit einem der beiden Führungskörper 162 verbunden, der entlang der Längserstreckung L verläuft und die Transporteinheiten 110 bevorzugt stufenlos aufnimmt.

FIG. 6a und 6b zeigen perspektivische Vor- und Rückansichten einer Transporteinheit 110, die Teil der Fördereinrichtung 100 ist, wie sie in der Entstapelvorrichtung 1 gemäß FIG. 1 bis FIG. 5 verwendet wird.

Die Transporteinheit 110 umfasst einen Kontaktbereich 111, der dazu eingerichtet ist, form- und/oder kraftschlüssig mit dem Behälterstapel B in Eingriff zu kommen.

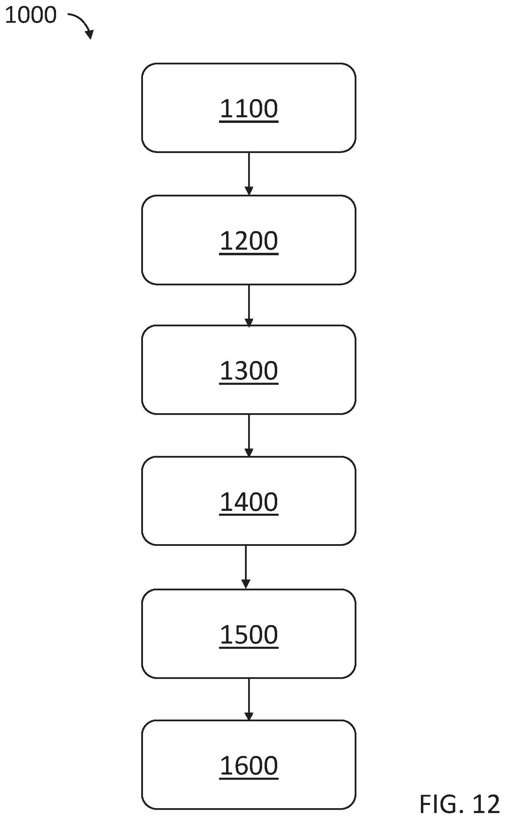

Die Transporteinheit 110 umfasst ferner ein Transportmittel 112, das als Transportriemen 113 ausgeführt ist. Der Transportriemen 113 weist eine äußere Eingriffsfläche 114 auf, die dazu eingerichtet ist, form- und/oder kraftschlüssig mit einem Behälterstapel B (vgl. FIG. 12) in Eingriff zu kommen. Die äußere Eingriffsfläche 114 bildet dabei den Kontaktbereich 111 aus, der dazu eingerichtet ist, form- und/oder kraftschlüssig mit dem Behälterstapel B in Eingriff zu kommen.

In FIG. 6a und 6c ist die äußere Eingriffsfläche 114 zumindest abschnittsweise im Wesentlichen plan ausgebildet und zum kraftschlüssigen in Eingriff bringen mit dem Behälterstapel B ausgebildet.

Zusätzlich zeigt FIG. 6c eine alternative Ausgestaltung der Eingriffsfläche 114, in welcher die Eingriffsfläche einen Verzahnungsabschnitt 115 aufweist, die quer zur Entnahmerichtung RE verlaufende Zähne 115a aufweist. Diese Zähne 115a sind dazu eingerichtet, formschlüssig in einen Abstand zwischen zwei benachbarten Behältern B1, B2 (vgl. FIG. 10) einzugreifen. Dies gewährleistet einen sicheren und stabilen Transport der Behälter durch die Transporteinheit 110.

Des Weiteren ist eine Führungsaufnahme 116 dargestellt, die mit dem Führungskörper 162 (vgl. FIG. 1) in Eingriff bringbar ist. Die Führungsaufnahme 116 ist so gestaltet, dass sie eine variable und veränderbare Positionierung der Transporteinheit 110 entlang des Führungskörpers 162 ermöglicht und diesen an einer definierten Position relativ zur Entnahmeposition E feststellt.

Die Transporteinheit 110 weist außerdem eine Wellenaufnahme 117 auf, die korrespondierend zu einem nicht-kreisförmigen Querschnitt ausgebildet ist. Diese Wellenaufnahme 117 ermöglicht eine formschlüssige Verbindung mit einer Abtriebswelle (vgl. FIG. 8), die dazu dient, die Transporteinheit 110 anzutreiben.

Die Konstruktion der Transporteinheit 110 ist darauf ausgelegt, eine zuverlässige und effiziente Bewegung des Behälterstapels zu ermöglichen, während gleichzeitig die Positionierung und der Eingriff mit dem Behälterstapel optimiert werden. Die Kombination aus Transportriemen 113, Kontaktbereich 111, Führungsaufnahme 116 und Wellenaufnahme 117 stellt sicher, dass die Transporteinheit 110 die Anforderungen an eine präzise und kontrollierte Bewegung innerhalb der Entstapelvorrichtung erfüllt.

Die Konstruktion der Transporteinheit ist darauf ausgelegt, eine zuverlässige und stabile Bewegung des Behälterstapels zu ermöglichen, wobei die Eingriffsfläche 114 eine zentrale Rolle spielt. Sie ist so konzipiert, dass sie eine optimale Kontaktfläche bietet, um den Behälterstapel sicher zu halten und zu bewegen. Die Führungsaufnahme 116 und die Wellenaufnahme 117 sind integrale Bestandteile der Transporteinheit, die ihre Funktionalität und Effizienz in der Anwendung sicherstellen.

FIG. 7 zeigt eine detaillierte Darstellung der Verbindung zwischen der Antriebsschnittstelle 140 und der Umlenkeinheit 130. Die Antriebsschnittstelle 140 ist dazu eingerichtet, das Antriebsdrehmoment v des Antriebs 400 (vgl. FIG 10) aufzunehmen und der Umlenkeinheit 130 als ein um eine Eingangsachse A1 wirkendes Eingangsdrehmoment v_{Ein} bereitzustellen. Die Antriebsschnittstelle 140 selbst wird durch den Antrieb 400 um eine parallel zur ersten Achse A1 verlaufende dritte Achse A3 angetrieben.

Die Umlenkeinheit 130 umfasst ein Getriebe 131, welches das um die Eingangsachse A1 wirkende Eingangsdrehmoment v_{Ein} in ein Ausgangsdrehmoment v_{Aus} übersetzt, das um mindestens eine orthogonal zu der ersten Achse A1 verlaufende Hauptantriebsachse A2 (vgl. FIG. 8) wirkt. Um diese Hauptantriebsachse A2 werden jeweils eine oder mehrere Transporteinheiten 110, vorliegend jeweils zwei Transporteinheiten 110 angetrieben.

Das Eingangsdrehmoment v_{Ein} kann sich dabei von dem Ausgangsdrehmoment v_{Aus} unterscheiden. Weiterhin ist die Eingangsachse A1 von der Hauptantriebsachse A2 verschieden ist, sodass sich das Eingangsdrehmoment v_{Ein} und das Ausgangsdrehmoment v_{Aus} in Bezug auf ihre Wirksachse unterscheiden, sodass das genutzte Drehmoment flexibel umgelenkt und an die räumlichen Gegebenheiten der Entstapelvorrichtung 1 angepasst werden kann.

Das Getriebe 131 umfasst einen Umlenkmechanismus U mit einer Antriebswelle 133, die über ein von der Antriebsschnittstelle 140 angetriebenes Antriebsmittel 132, mit dem Eingangsdrehmoment v_{Ein} um eine parallel zur Entnahmerichtung RE verlaufende Eingangsachse A1 angetrieben wird. Bei dem genutzten Antriebsmittel 132 kann es sich bevorzugt um eine Antriebskette 132a handeln, die sowohl mit einem der Antriebsschnittstelle 140 zugeordneten distalen Wellenende, als auch mit der Antriebswelle 133 in Eingriff ist und zwischen diesen ein Drehmoment überträgt.

Ferner umfasst das Getriebe 131 zwei Abtriebswellen 136, die vorliegend orthogonal zu der Antriebswelle 133 stehen und mittelbar drehmomentübertagend mit der Antriebswelle 133 verbunden sind. Abweichende Ausführungsformen, in der nur eine Abtriebswelle 136 zum Antreiben der Transporteinheiten vorgesehen ist, sind auch möglich. Die beiden Abtriebswellen 136 sind dabei parallel und beabstandet zueinander angeordnet und sind jeweils mit zwei der Transporteinheiten 110 in Eingriff, um das Ausgangsdrehmoment v_{Aus} auf diese zu übertragen und anzutreiben.

Das Getriebe 131 weist in der gezeigten Ausführungsform ferner einen Verteilmechanismus VM mit einer Hilfsabtriebswelle 135 auf. Die Hilfsabtriebswelle 135 wird unmittelbar von der Antriebswelle 133 angetrieben und dient dazu, die zwei Abtriebswelle n 136 parallel zueinander anzutreiben. Zu diesem Zweck ist die Hilfsabtriebswelle 135 drehmomentübertragend in Eingriff mit den Abtriebswelle n 136 und verbindet diese somit mittelbar mit der Antriebswelle 133.

Die Hilfsabtriebswelle 135 weist bevorzugt ein Schneckenrad aufweist, das mit einer Verzahnung 133a der Antriebswelle 133 drehmomentübertragend in Eingriff steht.

Weiterhin umfasst der Verteilmechanismus VM des Getriebes 131 mindestens zwei beabstandet zueinander angeordnete Kegelgetriebeeinheiten 131a. Jede der Kegelgetriebeeinheiten 131a weist jeweils ein auf der Hilfsabtriebswelle 135 angeordnetes Antriebskegelrad 137 und ein auf der jeweiligen Abtriebswelle 136 angeordnetes Abtriebskegelrad 138 auf, das mit dem Antriebskegelrad 137 in Eingriff steht und mit dem Ausgangsdrehmoment v_{Aus} um die Hauptantriebsachse A2 angetrieben wird.

Wie in FIG. 8 ersichtlich, steht ist Abtriebswelle 136 zur Übertragung des Ausgangsdrehmoments v_{Aus} formschlüssig mit mindestens einer, vorzugsweise mindestens zwei, der Transporteinheiten 110 verbunden. Diese Verbindung erfolgt per Formschluss, indem die Abtriebswelle 136 einen polygonalen Querschnitt aufweist. Die Transporteinheiten 110 verfügen über eine korrespondierende Wellenaufnahme 117 (vgl. FIG. 6a und FIG. 6b), die zu dem vorliegend polygonalen Querschnitt Q passt, um eine sichere und effiziente Übertragung des Ausgangsdrehmoments v_{Aus} zu gewährleisten. Andere nicht-kreisförmige Querschnitte sind auch möglich.

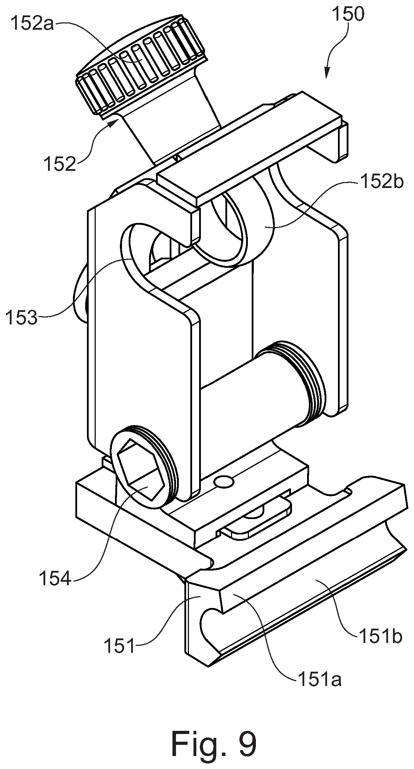

FIG. 9 zeigt eine detaillierte Darstellung des Fangmechanismus 150, der Teil der Entstapelvorrichtung 1 ist. Der Fangmechanismus 150 ist dazu eingerichtet, mindestens mit einem an dem äußeren Verpackungsbehälter B1 in der Entnahmeposition E anhaftenden Verpackungsbehälter B2 (vgl. FIG. 10) in Eingriff zu kommen, um dessen Bewegung in Entnahmerichtung RE zu hemmen. Dies ermöglicht, dass der äußere Verpackungsbehälter B1 durch die Lösebewegung in Entnahmerichtung RE (vgl. FIG. 11) von dem anhaftenden Behälter B2 getrennt wird.

Der Fangmechanismus 150 ist vorliegend dazu eingerichtet, zusätzlich auch mit dem äußeren Verpackungsbehälter B1 in der Entnahmeposition E (vgl. FIG. 10) in Eingriff zu kommen, wobei die Transporteinheiten 110 eingerichtet sind, den äußeren Verpackungsbehälter B1 in der Entnahmeposition E freizugeben, sodass dieser bevorzugt allein durch den Fangmechanismus 150 gehalten wird.

Der Fangmechanismus 150 umfasst ein Fangmittel 151, das vorliegend zwei orthogonal zur Entnahmerichtung RE (vgl. FIG. 1) verlaufende Fangkanten 151a und 151b aufweist. Diese Fangkanten 151a, 151b sind so ausgebildet, dass sie in Richtung eines Zentrums des Aufnahmeraums 200 vorstehen und dazu eingerichtet sind, in einen Randbereich der Behälter einzugreifen.

Das Fangmittel 151 umfasst dabei eine erste Fangkante 151a, die eingerichtet ist, mit dem äußeren Verpackungsbehälter B1 und dem anhaftenden Behälter formschlüssig in Eingriff zu kommen. Ferner weist das Fangmittel 151 eine zweite Fangkante 151b auf, die eingerichtet ist, bei einem Lösen des anhaftenden Behälters B2 gemeinsam mit dem äußeren Verpackungsbehälter B1 von der ersten Fangkante 151a in den Randbereich des anhaftenden Behälters B2 formschlüssig einzugreifen. Somit wird der äußere Verpackungsbehälter B1 durch dessen elastische Verformung infolge der Lösebewegung von der ersten Fangkante 151a gelöst und gleitet auch an der zweiten Fangkante 151b vorbei. Der anhaftende Behälter B2 ist allerdings nicht kraftschlüssig mit der Saugeinheit gekoppelt und erfährt die durch die Saugeinheit auf den äußeren Verpackungsbehälter B1 aufgebrachte Kraft zum Durchführen er Lösebewegung allerdings nur mittelbar über den äußeren Behälter. Diese Kraft reicht nicht aus, um eine elastische Verformung des haftenden Behälters B2 zum Überwinden des Fangmittels 151 zu bewirken, sodass der anhaftende Behälter B2 an der ersten bzw. der zweiten Fangkante zurückgehalten und von dem äußeren Verpackungsbehälter B1 abgelöst wird.

Der Fangmechanismus 150 ist mit einer Feststellvorrichtung 152 ausgestattet, die dazu eingerichtet ist, mit dem Führungskörper 162 (vgl. FIG. 1) kraftschlüssig zum Arretieren des Fangmechanismus 150 in Eingriff zu kommen. Die Feststellvorrichtung 152 umfasst ein Halteteil 152b zur zumindest auch kraftschlüssigen Kopplung mit dem Führungskörper 162 und ein Spannelement 152a zum Aufbringen einer Spannkraft auf das Halteteil 152b. Diese Konstruktion ermöglicht eine präzise Positionierung und Fixierung des Fangmechanismus 150 entlang der vorgesehenen Führung.

Zusätzlich ist der Fangmechanismus 150 mit einer Führungsausnehmung 153 versehen, die derart mit dem Führungskörper 162 in Eingriff bringbar ist, dass der Fangmechanismus 150 in Entnahmerichtung RE zusätzlich arretiert und entlang der Längserstreckung L (vgl. FIG. 2) bewegbar ist. Dies erlaubt eine flexible Anpassung der Position des Fangmechanismus 150, um verschiedene Behältergrößen oder -formen zu handhaben.

Zudem umfasst der Fangmechanismus 150 eine Lagerstelle 154 zum Lagern der Abtriebswelle 136. Die Lagerstelle 154 des Fangmechanismus 150 ist drehbar gelagert und korrespondierend zu dem nicht-kreisförmigen Querschnitt Q (vgl. FIG. 7) ausgebildet. Diese Lagerstelle 154 ist dazu eingerichtet, den Fangmechanismus 150 in Entnahmerichtung E zusätzlich zu arretieren und die Abtriebswelle 136 zu stabilisieren, was eine stabile und zuverlässige Funktion der Entstapelvorrichtung 1 gewährleistet.

FIG. 10 zeigt schematisch eine Entstapelvorrichtung 10 zum Vereinzeln von gestapelten Behältern B1 die in eine Verpackungslinie 1 integriert ist. Der Verfahrensablauf zum Verpacken von Produkten mit der Verpackungslinie wird dabei schematisch illustriert.

Die Verpackungslinie 1 umfasst neben der Entstapelvorrichtung 10 mindestens ein Zuführband 30, das zum Zuführen von Produkten P in einen Verpackungsbereich V und zum Übergeben der Produkte P an die vereinzelten Verpackungsbehälter B1 eingerichtet ist. Eine Zuführeinrichtung 20 ist zum Zuführen der vereinzelten äußeren Verpackungsbehälter B1 zu dem Verpackungsbereich V eingerichtet, und eine Verpackungseinheit 40 ist zum Verpacken der Produkte P in den vereinzelten Behältern B1 im Verpackungsbereich V eingerichtet.

Die Entstapelvorrichtung 10 der Verpackungslinie 1 umfasst, wie in Bezug auf FIG. 1 bis FIG. 5 beschrieben, eine Fördereinrichtung 100 und einen Aufnahmeraum 200, der dazu eingerichtet ist, einen Behälterstapel B in einer Entnahmerichtung RE bewegbar aufzunehmen, sodass jeweils ein in Entnahmerichtung RE äußerer Verpackungsbehälter B1 in eine Entnahmeposition E bewegbar ist.

Die Fördereinrichtung 100 ist mit mindestens Transporteinheiten 110 ausgestattet, die durch einen Antrieb 400 angetrieben werden, der ein Antriebsdrehmoment v erzeugt und auf die Transporteinheit 110 überträgt, um den Behälterstapel B in Entnahmerichtung RE zu bewegen.

Eine Saugeinrichtung 300 mit mindestens einer Saugeinheit 310 ist dazu eingerichtet, mit dem jeweiligen in die Entnahmeposition E bewegten äußeren Verpackungsbehälter B1 durch Herstellen eines Unterdrucks kraftschlüssig in Eingriff zu kommen und eine Lösebewegung LB in Entnahmerichtung RE durchzuführen, sodass der äußere Verpackungsbehälter B1 durch die Lösebewegung LB von dem Behälterstapel B in der Entnahmeposition E getrennt wird.

Die Entstapelvorrichtung 10 weist ferner eine Detektionseinheit 500 auf, die bevorzugt einen optischen Sensor 501 umfasst, und zum Erfassen des jeweiligen in die Entnahmeposition E bewegten äußeren Behälters B1 eingerichtet ist. Die Detektionseinheit 500 ist signalleitend mit einer Steuereinrichtung 600 der Entstapelvorrichtung 10 verbunden, die dazu eingerichtet ist, den Antrieb 400 beim Erfassen eines äußeren Behälters B1 in der Entnahmeposition E durch die Detektionseinheit 500 zu stoppen.

FIG. 11 zeigt eine detaillierte Ansicht der Entstapelvorrichtung 10 zum Vereinzeln von gestapelten Behältern eines Behälterstapels B. Die Entstapelvorrichtung 10 ist analog zu der in FIG. 1 bis FIG. 5 gezeigten Ausführungsform ausgebildet und es wird auf deren Beschreibung Bezug genommen.

Die Fördereinrichtung 100 ist mit mindestens vier Transporteinheit 110 ausgestattet, von denen vorliegend nur drei zu erkennen sind. Diese drei gezeigten Transporteinheit 110 sind an jeweils einer der drei Kontaktstellen K1, K2 und K3 mit dem Behälterstapel B in Kontakt, um den Behälterstapel B zu stabilisieren und dessen Positionierung relativ zur Entnahmerichtung RE festzulegen, sowie um eine Torsion des Behälterstapels B zu verhindern. Sie bilden damit eine Aufnahme für den Behälterstapel B aus.

Die Saugeinrichtung 300 umfasst in dem gezeigten Ausführungsbeispiel eine Saugeinheit 301, die in Entnahmerichtung unterhalb der Fördereinrichtung 100 angeordnet ist. Die Saugeinheit 301 ist dazu eingerichtet, mit dem jeweiligen in die Entnahmeposition E bewegten äußeren Verpackungsbehälter B1 durch Herstellen eines Unterdrucks kraftschlüssig in Eingriff zu kommen und eine Lösebewegung LB (vgl. FIG. 10) in Entnahmerichtung RE durchzuführen. Diese Lösebewegung LB trennt den äußeren Verpackungsbehälter B1 von dem Behälterstapel B in der Entnahmeposition E.

Die Fördereinrichtung 100 ist vorliegend derart ausgebildet, dass die Entnahmerichtung RE in vertikaler Richtung verläuft. Die Saugeinheit 301 ist strategisch darunter platziert, um den äußeren Verpackungsbehälter B1 effizient zu greifen und zu lösen, wobei die Schwerkraft beim Fördern des äußeren Behälters B1 in die Entnahmeposition E und bei Lösen des Behälters durch die Saugeinheit 301 unterstützend wirkt.

Zusätzlich ist die Zuführeinrichtung 20 der Verpackungslinie 1 gemäß FIG. 10 dargestellt, die zum Zuführen der vereinzelten Verpackungsbehälter B1 zu dem Verpackungsbereich (vgl. FIG. 10) eingerichtet ist. Die Zuführeinrichtung 20 ist so positioniert, dass sie die Verpackungsbehälter B1 nach dem Vereinzeln durch die Entstapelvorrichtung 10 weiterleitet.

FIG. 12 veranschaulicht ein Flussdiagramm des Verfahrens 1000 zum Vereinzeln von gestapelten Behältern. Die folgende Beschreibung des Verfahrens 1000 erfolgt unter Bezugnahme auf die Beschreibung der Entstapelvorrichtung 10 im Zusammenhang mit FIG. 1 bis FIG. 11.

Der erste Schritt 1100 des Verfahrens 100 umfasst das Aufnehmen eines Behälterstapels B, derart, dass der Behälterstapel B in einer definierten Entnahmerichtung RE bewegbar ist. Hierbei wird sichergestellt, dass jeweils ein äußerer Verpackungsbehälter B1 in eine spezifische Entnahmeposition E bewegt werden kann.

Im zweiten Schritt 1200 wird mindestens eine Transporteinheit form- und/oder kraftschlüssig mit dem Behälterstapel in Eingriff gebracht. Diese Transporteinheit spielt eine wesentliche Rolle bei der kontrollierten Bewegung des Behälterstapels und sorgt dafür, dass der äußere Verpackungsbehälter in die Entnahmeposition bewegt wird.

Der dritten Schritt 1300 beschreibt das Antreiben der Transporteinheit durch einen Antrieb, der dazu ausgebildet ist, ein Antriebsdrehmoment zu erzeugen. Der Antrieb ist entscheidend für die mechanische Bewegung der Transporteinheit und somit für die Fortführung des Prozesses.

Der vierte Schritt 1400 umfasst das geführte Bewegen des Behälterstapels B in der Entnahmerichtung durch die Transporteinheit. Dieser Schritt stellt sicher, dass der äußere Verpackungsbehälter in die Entnahmeposition bewegt wird, um ihn für den nächsten Prozessschritt verfügbar zu machen.

Im fünften Schritt 1500 wird ein Unterdruck durch eine Saugeinheit 301 hergestellt. Diese Saugeinheit 301 ist dazu eingerichtet, kraftschlüssig mit dem in die Entnahmeposition E bewegten äußeren Verpackungsbehälter B1 in Eingriff zu kommen. Der erzeugte Unterdruck ermöglicht es, den äußeren Verpackungsbehälter B1 sicher zu greifen und für die nachfolgenden Schritte zu fixieren.

Der letzten Schritt 1600 umfasst die Durchführung einer Lösebewegung in der Entnahmerichtung. Diese Bewegung wird durch die Saugeinheit ausgeführt, die mit dem äußeren Behälter in Eingriff steht. Der Zweck dieser Lösebewegung ist es, den äußeren Behälter von dem Behälterstapel in der Entnahmeposition zu trennen, sodass er für weitere Verarbeitungsschritte bereitsteht.

### Bezugszeichenliste

- 1: Verpackungslinie
- 10: Entstapelvorrichtung
- 20: Zuführeinrichtung
- 30: Zuführband
- 40: Verpackungseinheit
- 100: Fördereinrichtung
- 110: Transporteinheit
- 111: Kontaktbereich
- 112: Transportmittel
- 113: Transportriemen
- 114: Eingriffsfläche
- 114: äußere Eingriffsfläche
- 115: Verzahnungsabschnitt
- 116: Führungsaufnahme
- 117: korrespondierende Wellenaufnahme
- 117: Wellenaufnahme
- 130: Umlenkeinheit
- 131: Getriebe
- 131a: Kegelgetriebeeinheiten
- 132: genutzten Antriebsmittel
- 132a: Antriebskette
- 133: Antriebswelle
- 133a: Verzahnung
- 135: Hilfsabtriebswelle
- 136: Abtriebswelle (n)
- 137: Antriebskegelrad
- 140: Antriebsschnittstelle
- 150: Fangmechanismus
- 151: Fangmittel
- 151a: erste Fangkante
- 151b: zweite Fangkante
- 152: Feststellvorrichtung
- 152a: Spannelement
- 152b: Halteteil
- 153: Führungsausnehmung
- 154: Lagerstelle
- 160: Führungsmechanismus
- 162: Führungskörper
- 164: Verbindungsstange
- 200: Aufnahmeraum
- 201: Leitblech
- 300: Saugeinrichtung
- 301: Saugeinheit
- 400: Antrieb
- 500: Detektionseinheit
- 501: optischer Sensor
- 600: Steuereinrichtung
- 1000: Verfahren
- 1100: erster Schritt
- 1200: zweiter Schritt
- 1300: dritter Schritt
- 1400: vierter Schritt
- 1500: fünfter Schritt
- 1600: sechster Schritt
- B1: Verpackungsbehälter
- B2: anhaftender Verpackungsbehälter
- B: Behälterstapel
- RE: Entnahmerichtung
- LB: Lösebewegung
- E: Entnahmeposition
- v: Antriebsdrehmoments
- V: Verpackungsbereich
- L: Längserstreckung
- v_{Ein}: Eingangsdrehmoment
- v_{Aus}: Ausgangsdrehmoment
- A1: Eingangsachse
- A2: Hauptantriebsachse
- Q: nicht-kreisförmigen Querschnitt
- K1, K2, K3: Kontaktstellen
- PA: variable Projektionsfläche
- P: Produkt

## Patentansprüche

1. Entstapelvorrichtung (10) zum Vereinzeln von gestapelten Verpackungsbehältern (B1), umfassend
- ein Aufnahmeraum (200), der dazu eingerichtet ist, einen Behälterstapel (B) in einer Entnahmerichtung (RE), die vorzugsweise im Wesentlichen in vertikaler Richtung verläuft, bewegbar aufzunehmen, derart, dass jeweils ein in Entnahmerichtung (RE) äußerer Verpackungsbehälter (B1) in eine Entnahmeposition (E) bewegbar ist,
- eine Saugeinrichtung (300) mit mindestens einer Saugeinheit (301) die dazu eingerichtet ist, mit dem jeweiligen in die Entnahmeposition (E) bewegten äußeren Verpackungsbehälter (B1) durch Herstellen eines Unterdrucks kraftschlüssig in Eingriff zu kommen und eine Lösebewegung (LB) in Entnahmerichtung (RE) durchzuführen, derart, dass der äußere Verpackungsbehälter (B1) durch die Lösebewegung von dem Behälterstapel (B) in der Entnahmeposition getrennt wird,
- mindestens einen Antrieb (400) zum Erzeugen eines Antriebsdrehmoments (v),
**gekennzeichnet durch** eine Fördereinrichtung (100) mit mindestens einer Transporteinheit (110), die mit dem Behälterstapel (B) form- und/oder kraftschlüssig in Eingriff bringbar ist, und mindestens einen Antrieb (400) zum Übertragen eines Antriebsdrehmoments (v) mit der Transporteinheit (110) verbindbar ist, wobei die Transporteinheit (110) zum geführten Bewegen des Behälterstapels (B) in Entnahmerichtung (RE) eingerichtet ist, wobei der jeweils äußere Verpackungsbehälter (B1) in die Entnahmeposition (E) bewegt wird, um von dem Behälterstapel (B) durch die Saugeinrichtung (300) getrennt zu werden.

2. Entstapelvorrichtung (10) nach Anspruch 1,
wobei die Fördereinrichtung (100) mit einer Mehrzahl von Transporteinheiten (110) ausgestattet ist, von denen zumindest eine durch den Antrieb (400) antreibbar ist und die beabstandet zueinander angeordnet sind und jeweils einen Kontaktbereich (111) aufweisen, der dazu eingerichtet ist, form- und/oder kraftschlüssig mit dem Behälterstapel (B) in Eingriff zu kommen.

3. Entstapelvorrichtung (10) nach Anspruch 1 oder 2, ferner umfassend mindestens eine der folgenden:
- eine Detektionseinheit (500), die zum Erfassen des jeweiligen in die Entnahmeposition (E) bewegten äußeren Verpackungsbehälter (B1) eingerichtet ist, wobei die Detektionseinheit (500) bevorzugt einen optischen Sensor (501) umfasst
- eine mit der Detektionseinheit (500) und dem Antrieb (400) signalleitend verbundene Steuereinrichtung (600), die dazu eingerichtet ist, den Antrieb (400) beim Erfassen eines äußeren Verpackungsbehälters (B1) in der Entnahmeposition (E) durch die Detektionseinheit (500) zu stoppen.

4. Entstapelvorrichtung (10) nach einem der vorstehenden Ansprüche,
wobei die Transporteinheit (110) jeweils ein antreibbares Transportmittel (112) aufweist, das mit dem Behälterstapel (B) form- und/oder kraftschlüssig in Eingriff bringbar ist und zumindest abschnittsweise in Entnahmerichtung verläuft.

5. Entstapelvorrichtung (10) mindestens nach Anspruch 4,
wobei das Transportmittel (112) ein Transportriemen (113) ist, der eine äußere Eingriffsfläche (114) zum form- und/oder kraftschlüssig in Eingriff bringen mit dem Behälterstapel (B) aufweist, die den Kontaktbereich (111) ausbildet,
wobei die äußere Eingriffsfläche (114) vorzugsweise zumindest abschnittsweise im Wesentlichen plan ausgebildet und zum kraftschlüssigen in Eingriff bringen mit dem Behälterstapel (B) ausgebildet ist, und/oder
wobei die äußere Eingriffsfläche (114) vorzugsweise zumindest abschnittsweise einen Verzahnungsabschnitt (115) mit quer zur Entnahmerichtung (RE) verlaufenden Zähnen (115a) aufweist, die zum formschlüssigen in Eingriff bringen mit dem Behälterstapel (B) ausgebildet ist,
wobei die Zähne (115a) vorzugsweise dazu eingerichtet sind, jeweils in einen Abstand zwischen zwei benachbarten Verpackungsbehältern (B1) einzugreifen.

6. Entstapelvorrichtung (10) nach einem der vorstehenden Ansprüche,
wobei die Fördereinrichtung (100) mindestens eine mit dem mindestens einen Antrieb (400) verbindbare Antriebsschnittstelle (140) zum Übertragen des Antriebsdrehmoments (v) des Antriebs (400) und mindestens eine mit der Antriebsschnittstelle (140) verbundene Umlenkeinheit (130) aufweist, die dazu eingerichtet ist, das übertragene Antriebsdrehmoment (v) des Antriebs (400) in eine Bewegung der Transportmittel (112), vorzugsweise eine zumindest abschnittsweise Linearbewegung der Transportmittel (112) in Entnahmerichtung (RE), umzulenken,
wobei die Fördereinrichtung (100) vorzugsweise mit einer Mehrzahl der Transporteinheiten (110) ausgestattet und dazu eingerichtet ist, die Mehrzahl der Transporteinheiten (110) über die Antriebsschnittstelle (140) und die Umlenkeinheit (130), mittels des mindestens einen Antriebs (400) synchron anzutreiben,
wobei die Antriebsschnittstelle (140)
(a) zum Übertragen des Antriebsdrehmoments (v) des Antriebs (400) vorzugsweise lösbar und formschlüssig mit dem Antrieb (400) verbindbar ist, und wobei der Antrieb (400) bevorzugt bewegbar, insbesondere schwenkbar und die Antriebsschnittstelle (140) ortsfest an der Entstapelvorrichtung (10) aufgenommen ist, derart, dass der Antrieb (400) von einer Ruheposition, in welcher der Antrieb (400) beabstandet von der Antriebsschnittstelle (140) ist, in eine Arbeitsposition bewegbar ist, in welcher der Antrieb (400) mit der Antriebsschnittstelle (140) in Eingriff bringbar ist, und/oder
(b) vorzugsweise dazu eingerichtet ist, das Antriebsdrehmoment (v) aufzunehmen und der Umlenkeinheit (130) als Eingangsdrehmoment (v_{Ein}) um eine Eingangsachse (A1) bereitzustellen, wobei die Umlenkeinheit (130) ein Getriebe (131) aufweist, das dazu eingerichtet ist, das Eingangsdrehmoment (v_{Ein}) ein Ausgangsdrehmoment (v_{Aus}) um mindestens eine Hauptantriebsachse (A2) zu übersetzen und der mindestens einen Transporteinheit (110) bereitzustellen, wobei sich das Eingangsdrehmoment (v_{Ein}) und das Ausgangsdrehmoment (v_{Aus}) betragsmäßig unterscheiden oder die Eingangsachse (A1) von der Hauptantriebsachse (A2) verschieden ist.

7. Entstapelvorrichtung (10) nach einem der vorstehenden Ansprüche,
wobei die Fördereinrichtung (100) mindestens einen Fangmechanismus (150) aufweist, der dazu eingerichtet ist, mit einem an dem äußeren Verpackungsbehälter (B1) in der Entnahmeposition (E) anhaftenden Behälter (B2), zum Hemmen dessen Bewegung in Entnahmerichtung (RE), in Eingriff zu kommen, derart, dass der äußere Verpackungsbehälter (B1) durch die Lösebewegung in Entnahmerichtung (RE) von dem anhaftenden Verpackungsbehälter (B2) getrennt wird,
wobei der Fangmechanismus (150) vorzugsweise ein Fangmittel (151) mit mindestens eine orthogonal zur Entnahmerichtung (RE) verlaufende Fangkante (151a, 151b) aufweist, die in Richtung eines Zentrums des Aufnahmeraums (200) vorsteht und dazu ausgebildet ist, in einen Randbereich der Verpackungsbehälter (B1) einzugreifen und mindestens mit dem äußeren Verpackungsbehälter (B1) formschlüssig in Eingriff zu kommen, wobei sich der äußere Verpackungsbehälter (B1) infolge der Lösebewegung (LB) zum Lösen des Formschlusses zu der Fangkante (151a, 151b) elastisch verformt
vorzugsweise ist die Fangkante (151a) eine erste Fangkante (151a), die eingerichtet ist, mit dem äußeren Verpackungsbehälter (B1) und dem anhaftenden Verpackungsbehälter (B2) formschlüssig in Eingriff zu kommen, und
wobei das Fangmittel (151) ferner eine zweite Fangkante (151b) aufweist, die eingerichtet ist, bei einem Lösen des anhaftenden Behälters (B2) von der ersten Fangkante (151a) in den Randbereich des anhaftenden Behälters (B2) formschlüssig einzugreifen.

8. Entstapelvorrichtung (10) nach einem der vorstehenden Ansprüche,
wobei die Fördereinrichtung (100) einen Führungsmechanismus (160) aufweist, der den Aufnahmeraum (200) umgibt,
wobei der Führungsmechanismus (160) dazu eingerichtet ist, mindestens die Transporteinheit(en) (110) an einer Mehrzahl von Montagepositionen orthogonal zur Entnahmerichtung lösbar aufzunehmen, wobei die Transporteinheit (110) vorzugsweise in jeder der Montagepositionen einen definierten Abstand zu der Entnahmeposition in Entnahmerichtung (RE) aufweisen, und/oder
wobei der Führungsmechanismus (160) dazu eingerichtet ist, den Fangmechanismus (150) an einer Mehrzahl von Montagepositionen orthogonal zur Entnahmerichtung lösbar aufzunehmen, wobei der Führungsmechanismus (160) vorzugsweise in jeder der Montagepositionen einen definierten Abstand zu der Entnahmeposition in Entnahmerichtung (RE) aufweist, und der Führungsmechanismus (160) sich vorzugsweise zumindest abschnittsweise entlang einer Längserstreckung (L) orthogonal zur Entnahmerichtung (RE) und im Betrieb parallel zu einer Außenkante der Verpackungsbehälter (B1) erstreckt und dazu eingerichtet ist, die Transporteinheit (110) und/oder den Fangmechanismus (150) entlang der Längserstreckung (L) stufenlos aufzunehmen,
wobei der Führungsmechanismus (160) vorzugsweise mindestens eines der Folgenden aufweist:
- einen entlang der Längserstreckung (L) verlaufenden Führungskörper (162), der dazu eingerichtet ist, die Transporteinheit (110) und/oder den Fangmechanismus (150) entlang der Längserstreckung (L) stufenlos aufzunehmen,
- eine Feststellvorrichtung (152), welche dazu eingerichtet ist, mit dem Führungskörper (162) kraftschlüssig zum Arretieren des Fangmechanismus (150) in Eingriff zu kommen, wobei die Feststellvorrichtung (152) insbesondere ein Halteteil (152b) zur zumindest auch kraftschlüssigen Kopplung mit dem Führungskörper (162) und ein Spannelement (152a) zum Aufbringen einer Spannkraft auf das Halteteil (152b) umfasst,
- mindestens eine orthogonal zur Längserstreckung (L) verlaufende Verbindungsstange (164), die mit mindestens einem der entlang der Längserstreckung (L) verlaufenden Führungskörper (162) an einer Mehrzahl von Positionen, insbesondere stufenlos, in Eingriff bringbar ist, derart, dass der Aufnahmeraum (200) eine durch den Führungskörper (162) und die Verbindungsstange (164) definierte variable Projektionsfläche (PA) aufweist, die an die Behälter (B) anpassbar ist.

9. Entstapelvorrichtung (10) nach Anspruch 7 oder 8,
wobei die Transporteinheit (110) eine Führungsaufnahme (116) und/oder der Fangmechanismus (150) Führungsausnehmung (153) aufweist, die jeweils derart mit dem Führungskörper (162) in Eingriff bringbar sind, dass die Transporteinheit (110) und/oder der Fangmechanismus (150) in Entnahmerichtung (RE) arretiert und entlang der Längserstreckung (L) bewegbar ist.

10. Entstapelvorrichtung (10) mindestens nach Anspruch 6,
wobei das Getriebe (131) einen Umlenkmechanismus (U) mit einer Antriebswelle (133) aufweist, die über ein von der Antriebsschnittstelle (140) angetriebenes Antriebsmittel (132), insbesondere eine Antriebskette (132a), mit dem Eingangsdrehmoment (v_{Ein}) um eine parallel zur Entnahmerichtung (RE) verlaufende Eingangsachse (A1) angetrieben wird, und mindestens einer Abtriebswelle (136), die in einem Winkel, insbesondere orthogonal zu der Antriebswelle (133) steht, und zumindest mittelbar drehmomentübertagend mit der Antriebswelle (133) verbunden ist, derart, dass die mindestens eine Transporteinheit (110) durch die Abtriebswelle (136) mit dem Ausgangsdrehmoment (v_{Aus}) angetrieben wird,
wobei das Getriebe (131) vorzugsweise ferner einen Verteilmechanismus (VM) mit einer Hilfsabtriebswelle (135) umfasst, die unmittelbar von der Antriebswelle (133) angetrieben wird, wobei die Hilfsabtriebswelle (135) mit zwei Abtriebswelle n (136) drehmomentübertragend in Eingriff ist, um die Abtriebswelle n (136) mittelbar mit der Antriebswelle (133) zu verbinden, und
wobei die Hilfsabtriebswelle (135) vorzugsweise ein Schneckenrad (139) aufweist, das mit einer Verzahnung (133a) der Antriebswelle (133) drehmomentübertragend in Eingriff steht.

11. Entstapelvorrichtung (10) mindestens nach Anspruch 10,
wobei das Getriebe (131) mindestens zwei beabstandet zueinander angeordnete Kegelgetriebeeinheiten (131a) umfasst, die dem Verteilmechanismus (VM) zugeordnet sind, wobei die Kegelgetriebeeinheiten (131a) jeweils ein auf der Hilfsabtriebswelle (135) angeordnetes Antriebskegelrad (137) und ein auf der jeweiligen Abtriebswelle (136) angeordnetes Abtriebskegelrad (138) aufweisen, das mit dem Antriebskegelrad (137) in Eingriff steht und mit dem Ausgangsdrehmoment (v_{Aus}) um die Hauptantriebsachse (A2) angetrieben wird, oder
wobei die Abtriebswelle (136) zur Übertragung des Ausgangsdrehmoments (v_{Aus}) formschlüssig mit mindestens einer, vorzugsweise mindestens zwei, der Transporteinheiten (110) verbunden ist, insbesondere weist die Abtriebswelle (136) einen nicht-kreisförmigen Querschnitt, insbesondere einen polygonalen Querschnitt, auf und die Transporteinheiten (110) weisen eine korrespondieren zu dem nicht-kreisförmigen Querschnitt (Q) ausgebildete Wellenaufnahme (117) auf,
wobei der Fangmechanismus (150) vorzugsweise eine drehbar gelagerte und korrespondieren zu dem nicht-kreisförmigen Querschnitt (Q) ausgebildete Lagerstelle (154) aufweist, die zum Arretieren des Fangmechanismus (150) in Entnahmerichtung (RE) in eingriff bringbar ist.

12. Entstapelvorrichtung (10) nach einem der vorstehenden Ansprüche,
wobei der Aufnahmeraum (200) mindestens abschnittsweise durch die Fördereinrichtung (100) ausgebildet wird, derart, dass die Transporteinheiten (110) an mindestens drei voneinander beabstandeten Kontaktstellen (K1, K2, K3) mit dem Behälterstapel (B) in Kontakt sind, um dessen Positionierung relativ zur Entnahmerichtung (RE) festzulegen und eine Torsion des Behälterstapels (B) zu verhindern,
wobei dem Aufnahmeraum (200) vorzugsweise ein Leitblech (201) zugeordnet ist, das dazu eingerichtet ist, den Behälterstapel (B) in Richtung des Aufnahmeraums (200) zu leiten.

13. Fördereinrichtung (100) für eine Entstapelvorrichtung (10), insbesondere für eine Entstapelvorrichtung (10) nach einem der vorstehenden Ansprüche, mit
- mindestens einer Transporteinheit (110), die mit dem Behälterstapel (B) form- und/oder kraftschlüssig in Eingriff bringbar ist, und die mit mindestens einem Antrieb (400) der Entstapelvorrichtung (10) zum Antreiben der Transporteinheit (110) verbindbar ist, wobei die Transporteinheit (110) zum geführten Bewegen eines in einem Aufnahmeraum (200) aufgenommenen Behälterstapels (B) in einer Entnahmerichtung (RE) und zum Freigeben eines jeweils äußeren Verpackungsbehälter (B1) des Behälterstapels (B) in der Entnahmeposition (E) eingerichtet ist.

14. Verpackungslinie (1) zum Verpacken von Produkten in Verpackungsbehälter (B1), insbesondere von Nahrungsmittelprodukten, mit
- mindestens einer Entstapelvorrichtung (10) nach einem der Ansprüche 1 bis 23, die zum Vereinzeln von gestapelten Verpackungsbehälter (B1) eingerichtet ist,
- mindestens einem Zuführband (30), das zum Zuführen von Produkten (P) in einen Verpackungsbereich und zum Übergeben der Produkte (P) an die vereinzelten Verpackungsbehälter (B1) eingerichtet ist, und
- mindestens einer Zuführeinrichtung (20), die zum Zuführen der vereinzelten Verpackungsbehälter (B1) zu dem Verpackungsbereich (V) eingerichtet ist,
- mindestens eine Verpackungseinheit (40), die zum Verpacken der Produkte in den vereinzelten Verpackungsbehälter (B1) im Verpackungsbereich (V) eingerichtet ist.

15. Verfahren (1000) zum Vereinzeln von gestapelten Verpackungsbehälter (B1), mit den Schritten:
- Aufnehmen (1100) eines Behälterstapels (B) bewegbar in einer Entnahmerichtung (RE), derart, dass jeweils ein in Entnahmerichtung (RE) äußerer Verpackungsbehälter (B1) in eine Entnahmeposition (E) bewegbar ist,
- form- und/oder kraftschlüssiges in Eingriff Bringen (1200) mindestens einer Transporteinheit (110) mit dem Behälterstapel (B),
- Antreiben (1300) der Transporteinheit (110) durch einen Antrieb, der zum Erzeugen eines Antriebsdrehmoments (v) ausgebildet ist,
- geführtes Bewegen (1400) des Behälterstapels (B) in Entnahmerichtung (RE) durch die Transporteinheit (110), wobei der äußere Verpackungsbehälter (B1) in die Entnahmeposition (E) bewegt wird, und
- Herstellen (1500) eines Unterdrucks durch eine Saugeinheit (301) zum kraftschlüssigen in Eingriff mit dem jeweiligen in die Entnahmeposition (E) bewegten äußeren Verpackungsbehälter (B1),
- Durchführen (1600) einer Lösebewegung (LB) in Entnahmerichtung (RE) durch die mit dem äußeren Verpackungsbehälter (B1) in Eingriff stehende Saugeinheit (301), derart, dass der äußere Verpackungsbehälter (B1) durch die Lösebewegung von dem von dem Behälterstapel (B) in der Entnahmeposition getrennt wird.
